# EUROPEAN PATENT APPLICATION

(11) **EP 4 496 368 A1**
(43) Date of publication of application: **22.01.2025**
(21) Application number: 23770556.1
(22) Date of filing: 07.03.2023
(51) Int. Cl.: H04W 16/14, H04W 28/04, H04W 72/25, H04W 74/08, H04W 92/18

(54) **TRANSMISSION DEVICE, RECEPTION DEVICE, BASE STATION, AND METHOD**

(30) Priority: 15.03.2022 JP 2022040551
(71) Applicant: Sony Group Corporation, Tokyo 108-0075 (JP)
(72) Inventor: SHIMEZAWA, Kazuyuki, Tokyo 108-0075 (JP); KUSASHIMA, Naoki, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2023/008672
(87) International publication number: WO 2023/176600

(57) **Abstract**

A transmission device (40T) of the present disclosure performs sidelink communication with a reception device (40R) using a shared spectrum. The transmission device (40T) includes a control unit (45). The control unit (45) transmits at least one of a PSCCH (Physical Sidelink Control Channel) and a PSSCH (Physical Sidelink Shared Channel) to the reception device (40R) using a predetermined sidelink resource within a COT (Channel Occupancy Time) acquired by a predetermined COT acquisition device. The predetermined COT acquisition device is any one of a base station (20), the transmission device (40T), the reception device (40R), and a communication device (10).

## Description

### Field

The present disclosure relates to a transmission device, a reception device, a base station, and a method. Background

In the 3rd Generation Partnership Project (3GPP (registered trademark)), D2D (Device-to-Device) communication for performing direct communication between terminals (UEs) is standardized as sidelink communication by 4G LTE (Long Term Evolution) and 5G NR (New Radio), respectively. In the sidelink communication, V2X (Vehicle-to-Everything) communication is one of main use cases. As the V2X communication, V2V (Vehicle-to-Vehicle), V2I (Vehicle-to-Infrastructure), V2P (Vehicle-to-Pedestrian), and V2N (Vehicle-to-Network) are assumed.

In particular, in the sidelink communication in the 5G NR, Platooning, Advanced driving, Extended sensor, and Remote driving are assumed as Advanced V2X communication. In the sidelink communication in the 5G NR, standards are formulated to realize at least one of higher speed and larger capacity communication and lower delay and higher reliability communication compared with the sidelink communication in the 4G LTE.

As a use case of the sidelink communication, in addition to the V2X communication of the related art, extension and application to commercial use (a commercial use case) used in houses, offices, factories, and the like are expected.

When the commercial use of the sidelink communication is assumed, higher speed communication and lower cost are required as compared with the V2X communication of the related art.

As one solution for the higher speed communication and the lower cost, it has been proposed to use an unlicensed band (n unlicensed spectrum, an unlicensed band, and shared spectrum) that does not require a license for use of a predetermined frequency band. The unlicensed band is expected to be standardized in NR Release-18.

### Citation List

### Non Patent Literature

Non Patent Literature 1: "TS22.186, 3rd Generation Partnership Project; Technical Specification Group Services and System Aspects; Enhancement of 3GPP support for V2X scenarios; Stage 1 (Release 16)", [online], [Searched on March 8, 2022], Internet <https://www.3gpp.org/ftp//Specs/archive/22_series/22.186/2 2186-g20.zip>
Non Patent Literature 2: "RP-213678, "New WID on NR sidelink evolution," OPPO, LG Electronics, 3GPP TSG RAN Meeting #94e, Electronic Meeting, Dec. 6 - 17, 2021", [online], [Searched on March 8, 2022], Internet <https://www.3gpp.org/ftp/tsg_ran/TSG_RAN/TSGR_94e/Docs/RP-213678.zip>

### Summary

### Technical Problem

As explained above, the sidelink communication using the unlicensed band (the shared spectrum) has been studied. On the other hand, the communication in the conventional unlicensed band of the related art is assumed to be communication in a Uu link between a base station and a terminal device. sidelink communication is not assumed.

For that reason, it is difficult to directly apply the communication in the unlicensed band of the related art to the sidelink communication.

Therefore, the present disclosure provides a mechanism that can implement sidelink communication using an unlicensed band.

Note that the problem or the object explained above are merely one of a plurality of problems or objects that can be solved or achieved by a plurality of embodiments disclosed in the present specification. Solution to Problem

A transmission device of the present disclosure performs sidelink communication with a reception device using a shared spectrum. The transmission device includes a control unit. The control unit transmits at least one of a PSCCH (Physical Sidelink Control Channel) and a PSSCH (Physical Sidelink Shared Channel) to the reception device using a predetermined sidelink resource within a COT (Channel Occupancy Time) acquired by a predetermined COT acquisition device. The predetermined COT acquisition device is any one of a base station, the transmission device, the reception device, and a communication device.

### Brief Description of the Drawings

FIG. 1 is a diagram illustrating an overview of a wireless communication system according to an embodiment of the present disclosure.
FIG. 2 is a diagram for explaining an LBT category 1.
FIG. 3 is a diagram for explaining an LBT category 2.
FIG. 4 is a diagram for explaining LBT categories 3 and 4.
FIG. 5 is a diagram for explaining an overview of frame based equipment (FBE).
FIG. 6 is a diagram illustrating a configuration example of a base station according to the embodiment of the present disclosure.
FIG. 7 is a diagram illustrating a configuration example of a terminal device according to the embodiment of the present disclosure.
FIG. 8 is a diagram for explaining an example of a first COT response mode according to the embodiment of the present disclosure.
FIG. 9 is a diagram for explaining an example of a second COT response mode according to the embodiment of the present disclosure.
FIG. 10 is a diagram for explaining an example of a first COT sharing mode according to the embodiment of the present disclosure.
FIG. 11 is a diagram for explaining an example of a second COT sharing mode according to the embodiment of the present disclosure.
FIG. 12 is a diagram for explaining an example of a first HARQ-ACK report mode according to the embodiment of the present disclosure.
FIG. 13 is a diagram for explaining an example of a second HARQ-ACK report mode according to the embodiment of the present disclosure.
FIG. 14 is a diagram illustrating an example of sidelink communication according to an application example 1-1 of the embodiment of the present disclosure.
FIG. 15 is a diagram illustrating another example of the sidelink communication according to the application example 1-1 of the embodiment of the present disclosure.
FIG. 16 is a diagram illustrating an example of sidelink communication according to an application example 1-2 of the embodiment of the present disclosure.
FIG. 17 is a diagram illustrating an example of the sidelink communication according to the application example 1-2 of the embodiment of the present disclosure.
FIG. 18 is a diagram illustrating an example of sidelink communication according to an application example 1-3 of the embodiment of the present disclosure.
FIG. 19 is a diagram illustrating an example of sidelink communication according to an application example 1-4 of the embodiment of the present disclosure.
FIG. 20 is a diagram illustrating an example of sidelink communication according to an application example 2-1 of the embodiment of the present disclosure.
FIG. 21 is a diagram illustrating an example of sidelink communication according to an application example 2-2 of the embodiment of the present disclosure.
FIG. 22 is a diagram illustrating another example of the sidelink communication according to the application Example 2-2 of the embodiment of the present disclosure.
FIG. 23 is a diagram illustrating an example of sidelink communication according to an application example 2-3 of the embodiment of the present disclosure.
FIG. 24 is a diagram illustrating an example of sidelink communication according to an application example 2-4 of the embodiment of the present disclosure.
FIG. 25 is a diagram illustrating an example of sidelink communication according to an application example 3-1 of the embodiment of the present disclosure.
FIG. 26 is a diagram illustrating an example of sidelink communication according to an application example 3-2 of the embodiment of the present disclosure.
FIG. 27 is a diagram illustrating an example of sidelink communication according to an application example 3-3 of the embodiment of the present disclosure.
FIG. 28 is a diagram illustrating an example of sidelink communication according to an application example 3-4 of the embodiment of the present disclosure. Description of Embodiments

An embodiment of the present disclosure is explained in detail below with reference to the accompanying drawings. Note that, in the present specification and the drawings, components having substantially the same functional configurations are denoted by the same reference numerals and signs, whereby redundant explanation of the components is omitted.

In the present specification and the drawings, similar components in the embodiment are sometimes distinguished by adding different alphabets or numbers after the same reference numerals. However, when it is not particularly necessary to distinguish each of similar constituent elements, only the same reference number is added.

Each of one or more embodiments (including, examples, modifications, and application examples) explained below can be implemented independently. On the other hand, at least a part of a plurality of embodiments explained below may be implemented in combination with at least a part of other embodiments as appropriate. These plurality of embodiments can include new characteristics different from one another. Therefore, these plurality of embodiments can contribute to solving objects or problems different from one another and can achieve effects different from one another.

### <<1. Introduction>>

### <1.1. Overview of a wireless communication system>

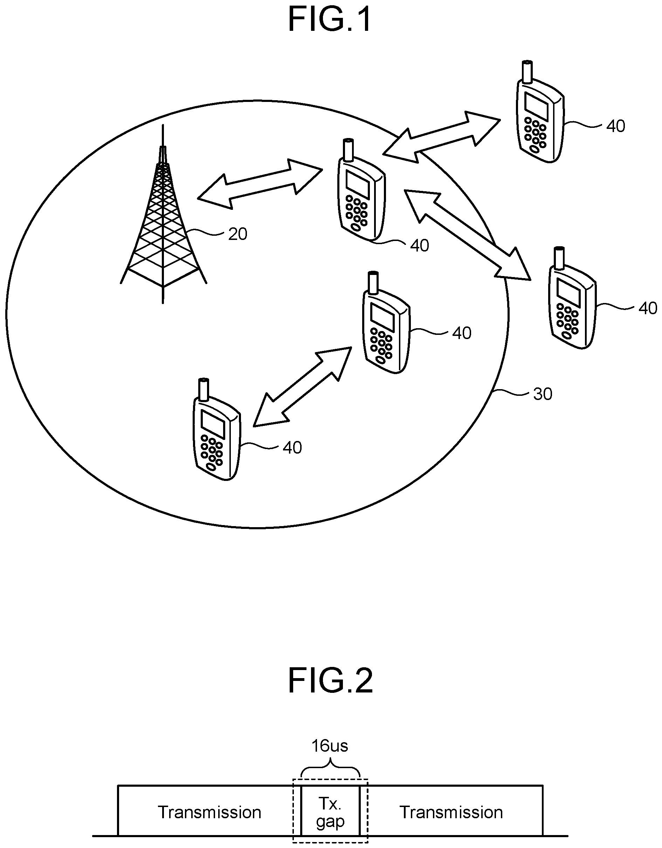

FIG. 1 is a diagram illustrating an overview of a wireless communication system according to an embodiment of the present disclosure.

The wireless communication system of FIG. 1 includes at least a base station 20 and a terminal device 40. The base station 20 may accommodate a plurality of terminal devices 40. The base station 20 can be connected to another base station 20 (not illustrated) by means of an X2 interface.

The base station 20 can be connected to a not-illustrated EPC(Evolved Packet Core) by means of an S1 interface. The base station 20 can be connected to a not-illustrated MME (Mobility Management Entity) by means of an S1-MME interface. The base station 20 can be connected to a not-illustrated GW (Serving Gateway) by means of an S1-U interface.

The S1 interface supports a many-to-many connection between at least one of the MME and the S-GW and the base station 20. In the present embodiment, the base station 20 and the terminal device 40 respectively support at least one of LTE and NR.

In the wireless communication system illustrated in FIG. 1, sidelink communication is performed in an unlicensed band. First, an overview of the sidelink communication is explained.

### <1.2. Sidelink communication>

### <1.2.1. Overview of the sidelink communication>

In the example illustrated in FIG. 1, two or more terminal devices 40 are present on the inside of a cell 30 configured by the base station 20. The terminal device 40 can perform the sidelink communication. Alternatively, when at least one terminal device 40 among the two or more terminal devices 40 is present on the inside of the cell 30 and the remaining terminal devices 40 are present on the outside of the cell 30, the terminal device 40 inside the cell 30 and the terminal devices 40 outside the cell 30 can perform the sidelink communication. The terminal device 40 present on the inside of the cell 30 can perform relay between the base station 20 and the terminal devices 40 present on the outside of the cell 30 by communicating with the base station 20.

Note that the terminal device 40 being present on the inside of the cell 30 can also be considered a state in which the quality of a downlink signal from the base station 20 received by the terminal device 40 is equal to or higher than a predetermined standard. The terminal device 40 being present on the inside of the cell 30 can also be considered a state in which a predetermined downlink channel from the base station 20 received by the terminal device 40 can be decoded with a predetermined probability or more. In other words, the terminal device 40 being present on the outside of the cell 30 can also be considered a state in which the quality of the downlink signal from the base station 20 received by the terminal device 40 is equal to or lower than the predetermined standard. The terminal device 40 being present on the outside of the cell 30 can also be considered a state in which the predetermined downlink channel from the base station 20 received by the terminal device 40 cannot be decoded with the predetermined probability or more.

In the following explanation, in the present embodiment, when two terminal devices 40 that perform transmission and reception by the sidelink communication are distinguished, one is referred to as first terminal device 40_1 and the other is referred to as second terminal device 40_2.

### <1.2.2. Details of the sidelink communication>

The sidelink communication is direct communication between the first terminal device 40_1 and the second terminal device 40**_**2. In the sidelink communication, a resource pool is set in the terminal device 40. The resource pool is candidates of time and frequency resources used for transmission and reception of the sidelink communication. The terminal device 40 selects resource for transmission and reception of sidelink from the resource pool and performs the sidelink communication. Since the sidelink communication can be performed using uplink resources (an uplink subframe and an uplink component carrier), the resource pool can also be set in the uplink subframe or the uplink component carrier. The sidelink communication can be performed using dedicated resources.

The sidelink physical channel includes a PSCCH (Physical Sidelink Control Channel), a PSSCH (Physical Sidelink Shared Channel), and a PSFCH (Physical Sidelink Feedback Channel).

The PSCCH is used to transmit sidelink control information (SCI). Mapping of information bits of the sidelink control information is defined as an SCI format. The sidelink control information includes a sidelink grant. The sidelink grant is used for scheduling the PSSCH.

The PSSCH is used to transmit sidelink data (sidelink shared channel: SL-SCH). The PSSCH may be used to transmit control information of an upper layer such as a MAC layer or a PDCP layer.

The PSFCH is used to reply to the terminal device 40 on a transmission side with a HARQ response (ACK/NACK) to a decoding result of the PSSCH or the SL-SCH.

The resource pool is set in the terminal device 40 from the base station 20 by an SIB or a dedicated RRC message. Alternatively, the resource pool is set by information concerning the resource pool preset in the terminal device 40. Note that, in the following explanation, all or part of the information set by the base station 20 can be set in the terminal device 40 in advance. The resource pool of time is indicated by period information, offset information, and subframe bitmap information. The frequency resource pool is indicated by a start position of a resource block, an end position of the resource block, and the number of consecutive resource blocks.

### [Sidelink resource pool]

In the sidelink communication, a resource pool (a sidelink resource pool) is set as resources used to transmit the PSSCH and reception of the PSSCH. In a frequency axis, the resource pool is configured by one or more consecutive subchannels. The subchannel is configured by one or more consecutive PRBs. The number of subchannels and the size of the subchannels are set by upper layer parameters.

Slots set as the resource pool are indicated by a bitmap. Bits of the bitmap corresponds to slots that can be set as the resource pool of the sidelink communication. For example, when a value of a bit indicates 1, a slot corresponding to the bit is set as the resource pool. When the value of the bit indicates 0, the slot corresponding to the bit is not set as the resource pool. The length of the bitmap is set by an upper layer.

A slot including an S-SS/PSBCH block (S-SSB) is not set as the resource pool. A slot that does not semi-statically include a predetermined number of uplink symbols is not set as the resource pool. A reserved slot is not set as the resource pool. An S-SS (Sidelink-Synchronization Signal) is a signal used for synchronization in the sidelink communication. A PSBCH (Physical Sidelink Broadcast Channel) is a channel used for transmitting notification information (system information or the like) in the sidelink communication.

Note that a device that sets the resource pool may be other than the base station 20. Examples of the device other than the base station 20 include a representative terminal device 40 (a primary terminal device or a master terminal device).

### <1.3. NR (NR-U: NR Unlicensed) in the unlicensed band>

In the Uu link of the 5G NR (downlink communication and uplink communication between the base station 20 and the terminal device 40), a communication scheme in the unlicensed band is standardized. In the following explanation, a technique relating to the NR-U is explained.

### (Channel access of the unlicensed channel)

In the unlicensed channel, a wireless device (the base station 20 or the terminal device 40) performs channel access (medium access, or listen before talk) before transmitting a signal. Note that the unlicensed channel is a unit of a frequency band in which the channel access is performed. The channel can also be expressed as a carrier, a frequency carrier, a component carrier, a cell, a frequency band, an LBT band, or the like. The unlicensed channel may correspond to the subchannel in the sidelink.

In the channel access, the wireless device performs power measurement (carrier sense, sensing, or Channel Clear Assessment: CCA) of a channel and compares a measured power value of the channel with a power detection threshold (an Energy detection Threshold).

When the measured power value of the channel is lower than the power detection threshold, the channel is determined as clear. When the measured power value of the channel is higher than the power detection threshold, the channel is determined as busy. When the channel is determined as clear in all sensing slots, the wireless device can acquire a transmission right (TxOP, transmission opportunity, a COT, or a channel occupancy time) for the channel and transmit a signal.

Further, the acquired channel may be used for transmission of another wireless device (the base station 20 or the terminal device 40). In this case, a grant is transmitted from the wireless device (one of the base station 20 and the terminal device 40) that has acquired the channel to the other wireless device (the other of the base station 20 and the terminal device 40).

The wireless device (one of the base station 20 and the terminal device 40) that acquires a channel is referred to as initiating device. The wireless device (the other of the base station 20 and the terminal device 40) the uses the channel acquired by the other wireless device (one of the base station 20 and the terminal device 40) is referred to as responding device.

Note that, in 3GPP (registered trademark), four types of LBT categories are defined as carrier sensing schemes. In the channel access, LBT corresponding to any one of the following LBT categories is performed.
· LBT Category 1: No LBT
· LBT category 2: LBT in which random backoff is not performed
· LBT category 3: LBT in which random backoff by a fixed size contention window is performed
· LBT category 4: LBT in which random backoff by a variable-size contention window is performed

Here, the LBT categories are explained with reference to FIG. 2 to FIG. 4.

FIG. 2 is a diagram for explaining the LBT category 1. As illustrated in FIG. 2, in the LBT category 1 (Cat1 LBT), the wireless device performs communication without performing the LBT. In an example illustrated in FIG. 2, the wireless device performs transmission at a transmission interval of 16 microseconds. The LBT category 1 is also called Type 2C channel access or Type 3 channel access.

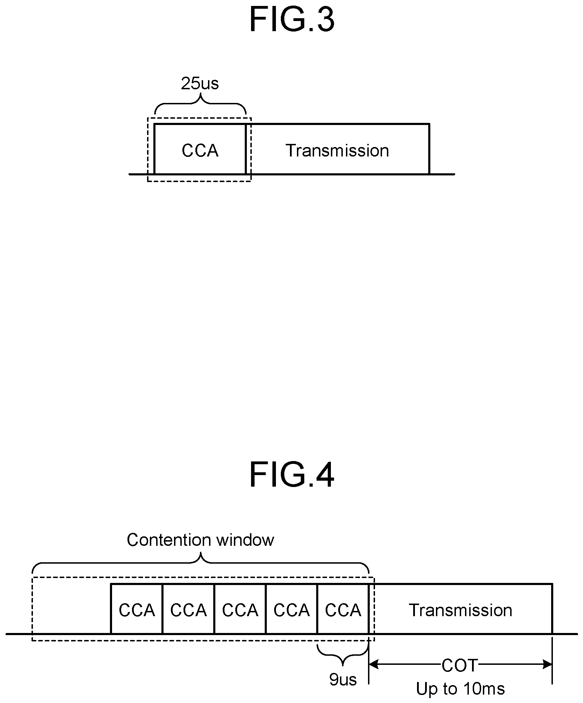

FIG. 3 is a diagram for explaining the LBT category 2. As illustrated in FIG. 3, in the LBT category 2 (Cat2 LBT), the wireless device performs the LBT in which the random backoff is not performed and performs communication. In an example illustrated in FIG. 3, the wireless device performs CCA in one sensing slot and transmits a signal when determining that a channel is clear.

The length of one sensing slot (CCA) is 25 microseconds or 16 microseconds. In the example illustrated in FIG. 3, the wireless device performs transmission at a transmission interval of 25 microseconds. The LBT category 2 in which the time length of the CCA is 25 microseconds is also called Type 2A channel access. The LBT category 2 in which the time length of the CCA is 16 microseconds is also called Type 2B channel access.

FIG. 4 is a diagram for explaining the LBT categories 3 and 4. As illustrated in FIG. 4, in LBT categories 3 and 4 (Cat3 LBT and Cat4 LBT), the wireless device performs a predetermined number of times of the CCA in a contention window (CW) and transmits a signal when determining that a channel is clear. That is, the wireless device performs the CCA in a predetermined number of sensing slots and transmits a signal when determining that a channel is clear in all the sensing slots. FIG. 4 illustrates a case in which the length of one sensing slot is 9 microseconds and the CCA is performed five times.

Note that the LBT category 3 and the LBT category 4 are different in whether the size of the contention window is fixed or variable. Alternatively, the LBT category 3 and the LBT category 4 are different in whether the contention window size is adjusted.

In the LBT category 3, random backoff by a fixed size contention window is performed. The LBT category 3 is also called Type 1A channel access. The LBT category 3 can be used at a predetermined frequency (for example, a frequency defined by FR2-2 (Frequency Range 2-2) including a 60 GHz band) and not be used at the other frequencies.

The LBT category 4 performs random backoff by a variable size contention window. The LBT category 4 is also called Type 1 channel access.

### (Channel access procedure of the unlicensed channel)

A channel access (medium access or Listen before Talk) procedure is performed in order to access the unlicensed channel in which the base station 20 or the terminal device 40 performs transmission.

In a channel access procedure defined as load-based equipment (LBE, Dynamic Channel Access, or Channel Access Procedure in Dynamic Channel Occupancy), sensing of a channel is performed once or a plurality of times. Based on a result of the sensing, it is determined whether the channel is idle (unoccupied, available, or enable) or busy (occupied, unavailable, or disable) (vacancy determination). In the channel sensing, power of the channel in a predetermined waiting time is sensed.

Examples of the waiting time of the channel access procedure include a first waiting time (slot), a second waiting time, a third waiting time (a defer period), and a fourth waiting time.

The slot is a unit of a waiting time of the base station 20 and the terminal device 40 in the channel access procedure. The slot is defined by, for example, 9 microseconds.

In the second waiting time, one slot is inserted at the head. The second waiting time is defined by, for example, 16 microseconds.

The defer period is composed of the second waiting time and a plurality of consecutive slots following the second waiting time. The number of the plurality of consecutive slots following the second waiting time is determined based on a priority class (a channel access priority class) used to satisfy the QoS.

The fourth waiting time is composed of the second waiting time and one slot following the second waiting time. The fourth waiting time is defined by, for example, 25 microseconds.

The base station 20 or the terminal device 40 senses a predetermined channel during a period of a predetermined slot. When power detected by the base station 20 or the terminal device 40 for at least 4 microseconds within the predetermined slot period is smaller than a predetermined power detection threshold, the predetermined slot is regarded as idle. On the other hand, when the power is larger than the predetermined power detection threshold, the predetermined slot is regarded as busy.

The channel access procedure includes a first channel access procedure, a second channel access procedure, and a third channel access procedure. The first channel access procedure is performed using a plurality of slots and a defer period. The second channel access procedure is performed using one second waiting time or fourth waiting time. In the third channel access procedure, channel sensing is not performed.

Parameters concerning the channel access are determined based on the priority class. The parameters concerning the channel access include a minimum contention window, a maximum contention window, a maximum channel occupancy time, and a value that the contention window can take.

The priority class is decided by a value of a QCI (QoS class identifier) or a 5QI (5G QoS Identifier) for processing a QoS (Quality of Service). A correspondence table of the priority class and the parameters concerning the channel access is shown in Table 1, an example of mapping of the priority class and the QCI is shown in Table 2, and an example of mapping of the priority class and the 5QI is shown in Table 3.

**(Table 1) Example of Table Correspondence between Priority Classes and Parameters Related to Channel Access**

| Channel access priority class (p) | mₚ | Minimum contention window CW_{min.p} | Maximum contention window CW_{max.p} | Maximum channel occupancy time T_{mcot.p} | Value that the contention window CWₚ can take |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

**(Table 2) Example of Mapping between Priority Classes and QCIs**

| Channel access priority class (p) | QCI |
|---|---|
| 1 | 1, 3, 5, 65, 66, 69, 70 |
| 2 | 2, 7 |
| 3 | 4, 6, 8, 9 |
| 4 | Other than the above |

| (Table 3) Example of Mapping between Priority Classes and 5Qis | |
|---|---|
| Channel access priority class (p) | 5QI |
| 1 | 1, 3, 5, 65, 66, 69, 70, 79, 80, 82, 83, 84, 85 |
| 2 | 2, 7, 71 |
| 3 | 4, 6, 8, 9, 72, 73, 74, 76 |
| 4 | - |

### (Details of the first channel access procedure)

The first channel access procedure is classified into the LBT category 3 or the LBT category 4. In the present embodiment, the first channel access procedure is also called Type 1 channel access procedure or Type 1 channel access procedure.

In the first channel access procedure, a procedure described below is performed.
(0) Channel sensing is performed in the defer period. When the channel is idle in a slot in the defer period, the procedure proceeds step (1) and, otherwise, proceeds to step (6).
(1) An initial value of a counter is acquired. A value that the initial value of the counter can take is an integer from 0 to a contention window CW. The initial value of the counter is determined at random according to a uniform distribution. The initial value of the counter is set in a counter N, and the procedure proceeds to step (2).
(2) When the counter N is larger than 0 and it is selected to subtraction of the counter N, 1 is subtracted from the counter N. Thereafter, the procedure proceeds to step (3).
(3) A period of a slot is added and the procedure is put on standby. A channel is sensed in the additional slot. When the additional slot is idle, the procedure proceeds step (4) and, otherwise, proceeds to step (5).
(4) When the counter N is 0, this procedure is stopped. Otherwise, the procedure proceeds to step (2).
(5) A defer period is added and the procedure is put on standby. The channel is sensed until busy is detected in any one slot included in the additional defer period or until all slots included in the additional defer period can be detected as idle. Thereafter, the procedure proceeds to step (6).
(6) When the channel is sensed as idle in all of the slots included in the additional defer period, the procedure proceeds to step (4) and, otherwise, proceeds to step (5).

After step (4) in the procedure explained above is stopped, transmission including data such as PDSCH and PUSCH is performed in the channel.

Note that, after step (4) in the procedure explained above is stopped, the transmission may not be performed in the channel. In this case, thereafter, when the channel is idle in all of a slot and the defer period immediately before the transmission, the transmission may be performed without the procedure explained above being performed. On the other hand, when the channel is not idle in either the slot or the defer period, after it is sensed that the channel is idle in all the slots in the additional defer period, the procedure proceeds to step (1).

### (Details of the second channel access procedure)

The second channel access procedure (the Type 2 channel access procedure or the Type 2 channel access) includes a Type 2A channel access procedure, a Type 2B channel access procedure, and a Type 2C channel access procedure.

The Type 2A channel access procedure and the Type 2B channel access procedure are classified into the LBT category 2. In the Type 2A channel access procedure, the fourth waiting time is used. In the Type 2B channel access procedure, the second waiting time is used.

In the Type 2A channel access procedure and the Type 2B channel access procedure, transmission may be performed immediately after the channel is regarded as idle as a result of sensing in at least the second waiting time or the fourth waiting time. On the other hand, when the channel is regarded as not idle as a result of sensing in at least the second waiting time or the fourth waiting time, transmission is not performed. The second channel access procedure is applied when a transmission interval is 16 microseconds or 25 microseconds.

The Type 2C channel access procedure is classified into the LBT category 1. In the Type 2C channel access procedure, a transmission interval is 16 microseconds or less and channel sensing during the interval is not performed (unnecessary). However, in the Type 2C channel access procedure, a transmittable time is limited to 584 microseconds at most. The Type 2C channel access procedure can be applied in an FR1 (Frequency Range 1).

### (Details of the third channel access procedure)

The third channel access procedure (the Type 3 channel access procedure) is not classified into the LBT category explained above. In the Type 3 channel access procedure, a channel is not sensed before transmission. The Type 3 channel access procedure is applied in an FR2 (Frequency Range 2) or an FR2-2 and cannot be applied in the FR1, although there are no limitations on transmission timing and a transmittable time unlike the Type 2C channel access procedure.

Note that implementation of the third channel access procedure (the Type 3 channel access procedure) can be restricted or prohibited based on laws and the like of a country or an area where the present embodiment is implemented. Whether the Type 3 channel access procedure can be implemented is determined based on control information transmitted from the base station 20 or information set in a terminal beforehand.

### [Contention window adaptation procedure]

In the LBT category 4, a contention window adaptation procedure is performed.

The contention window CW used in the first channel access procedure is determined based on the contention window adaptation procedure.

A value of the contention window CW is retained for each priority class. The contention window CW takes a value between a minimum contention window and a maximum contention window. The minimum contention window and the maximum contention window are determined based on the priority class.

Adjustment of the value of the contention window CW is performed before step (1) of the first channel access procedure. When a ratio of NACK is higher than a threshold in a HARQ response corresponding to a shared channel of a reference HARQ process in at least a reference subframe (a reference slot or a reference section) in the contention window adaptation procedure, the value of the contention window CW is increased. Otherwise, the value of the contention window CW is set to the minimum contention window.

The value of the contention window CW is increased, for example, based on an equation: CW=2* (CW+1)-1.

The reference section is defined as a section from the head of an occupied channel to the end of a first slot including at least one unicast PDSCH or to the end of a first transmission burst including the at least one unicast PDSCH.

For example, 90% is set as the threshold.

### (Details of a channel access procedure in a downlink)

When downlink transmission including PDSCH, PDCCH, and/or EPDCCH is performed in an unlicensed channel, the base station 20 accesses the channel based on the first channel access procedure and performs the downlink transmission.

On the other hand, when performing downlink transmission including DRS but not including PDSCH in the unlicensed channel, the base station 20 accesses the channel based on the second channel access procedure and performs the downlink transmission. Note that a period of the downlink transmission is preferably shorter than 1 millisecond. In the FR2-2, downlink transmission can be performed based on the third channel access procedure in addition to the first channel access procedure and the second channel access procedure.

### (Details of the channel access procedure in the uplink)

In the unlicensed channel, when it is instructed to perform the first channel access procedure with an uplink grant for scheduling PUSCH, the terminal device 40 performs the first channel access procedure before uplink transmission including the PUSCH.

When it is instructed to perform the second channel access procedure with an uplink grant for scheduling PUSCH, the terminal device 40 performs the second channel access procedure before uplink transmission including the PUSCH.

For uplink transmission not including PUSCH but including SRS, the terminal device 40 performs the second channel access procedure before the uplink transmission.

It is assumed that the end of the uplink transmission indicated by the uplink grant is within an uplink duration UL duration). In this case, regardless of a procedure type instructed by the uplink grant, the terminal device 40 performs the second channel access procedure before the uplink transmission.

When uplink transmission continues with the fourth waiting time interposed after the end of the downlink transmission from the base station 20, the terminal device 40 performs the second channel access procedure before the uplink transmission.

In the FR2-2, uplink transmission can be performed based on the third channel access procedure in addition to the first channel access procedure and the second channel access procedure.

### (Channel access procedure of the NR in the present embodiment)

In a channel access procedure in an unlicensed channel using the NR, non-beam formed channel sensing and beam formed channel sensing can be performed.

The non-beam formed channel sensing is channel sensing by reception, the directivity of which is not controlled, or channel sensing not having direction information. The channel sensing not having direction information is, for example, channel sensing in which measurement results are averaged in all directions. A transmission device (the base station 20 or the terminal device 40) may not recognize directivity (an angle and a direction) used in the channel sensing.

The beam formed channel sensing is channel sensing by reception with controlled directivity or channel sensing having direction information. That is, the beam formed channel sensing is channel sensing in which a reception beam is directed in a predetermined direction. A transmission device (the base station 20 or the terminal device 40) having a function of performing the beam formed channel sensing can perform channel sensing one or more times using different directivities.

A transmission device having a function of performing the beam formed channel sensing performs the beam formed channel sensing to narrow an area detected by the sensing. Accordingly, the transmission device (the base station 20 or the terminal device 40) can reduce a frequency of detection of a noninterfering communication link and reduce an exposure terminal problem.

### (Channel access of the frame based equipment (FBE))

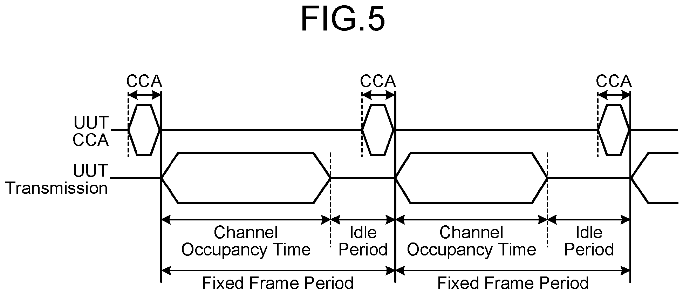

FIG. 5 is a diagram for explaining an overview of the frame based equipment (FBE). An upper part of FIG. 5 illustrates timing of CCA (Channel Clear Assessment) with the horizontal axis set as a time axis. A lower part of FIG. 5 illustrates timing of transmission with the horizontal axis set as a time axis.

In a channel access (Listen before Talk) procedure defined as frame based equipment (FBE, semi-static channel access, or channel access procedure in semi-static channel occupancy), sensing of a channel is performed once before transmission. Based on a result of the sensing, it is determined whether the channel is idle (unoccupied, available, or enable) or busy (occupied, unavailable, or disable) (vacancy determination). In the channel sensing, power of the channel in a predetermined waiting time is sensed.

A transmission and/or reception configuration used in the frame based equipment has periodic timing called fixed frame period.

The fixed frame period is set in channel access of the frame based equipment. The fixed frame period is set from 1 millisecond to 10 milliseconds. The fixed frame period must not be changed twice or more in 200 milliseconds.

In the channel access of the frame based equipment, the equipment performs sensing of a channel immediately before starting transmission from the head of the fixed frame period. The equipment performs the sensing once using one slot composed of 9 microseconds or less. As a result of sensing the channel, when a power value is larger than the predetermined power detection threshold, the channel is considered busy. On the other hand, when the power value is smaller than the predetermined power detection threshold, the channel is clear and the equipment can perform the transmission. The equipment can perform the transmission during a channel occupancy time. The equipment can perform a plurality of transmissions without performing the sensing if it is within the channel occupancy time and a gap among the plurality of transmissions is 16 microseconds or less. On the other hand, when the gap among the plurality of transmissions exceeds 16 microseconds, the equipment needs to perform additional channel sensing. In the additional channel sensing, similarly, the sensing is performed once using one slot.

The channel occupancy time in the channel access of the frame based equipment does not exceed 95% of the fixed frame period. An idle period (Idle Period) in the channel access of the frame based equipment is equal to or larger than 5% of the fixed frame period. The idle period is 100 microseconds or more.

Transmission of a response (ACK/NACK or HARQ-ACK) to the transmission from the equipment may be performed within the channel occupancy time.

### (COT(Channel Occupancy Time))

In an operation of the unlicensed band, the wireless communication device performs LBT before signal transmission. When it is determined that a channel is clear as a result of the LBT, the channel can be occupied for a predetermined time.

The predetermined time during which the channel can be occupied after the LBT is called COT (Channel Occupancy Time). In the LBE, the COT is defined to fall within a maximum channel occupancy time (Maximum COT) defined in Table 1 explained above. The COT is defined to be 95% or less of the fixed frame period in the FBE.

The COT acquired by the wireless communication device may be used for transmission of another wireless communication device that is a communication partner. Another wireless communication device (responding device) different from the wireless communication device (initiating device) that has acquired the COT transmitting a signal using the COT is referred to as COT sharing. When the COT sharing is performed, another wireless communication device also needs to recognize the COT and a COT length.

The COT length of the COT (a base station device start COT or a base station device acquisition COT) acquired by the base station 20 is notified to the terminal device 40 using a DCI format 2_0. The terminal device 40 recognizes the length of the base station device start COT based on a COT length indicator included in the DCI format 2_0.

The terminal device 40 can implicitly recognize the COT based on a PDSCH scheduling from the base station 20.

The terminal device 40 can implicitly recognize the COT based on a downlink physical signal (an SS/PBCH block, CSI-RS, or DMRS of PDCCH) from the base station 20.

The COT length of the COT (the terminal device start COT or the terminal device acquisition COT) acquired by the terminal device 40 is notified to the base station 20 using CG-UCI. The base station 20 recognizes the length of the terminal device start COT based on COT sharing information included in the CG-UCI.

### <1.4. Overview of the embodiment>

### <1.4.1. Problem>

The NR-U in the Uu link explained above assumes downlink communication and uplink communication between the base station 20 and the terminal device 40.

On the other hand, in the wireless communication system according to the present embodiment, it is assumed that the sidelink communication is performed in the unlicensed band. Note that the unlicensed band may mean, for example, a frequency band that is not a frequency band (i.e., a licensed band) permitted to be used/operated by only one operator. That is, in the unlicensed band, the use and the operation may be shared by a plurality of operators. Further or alternatively, in the unlicensed band, the use and the operation may be shared by a plurality of RATs (may include not only the LTE and the NR but also other RATs (e. g., WiFi (registered trademark)). From the viewpoint that the use and the operation may be shared by a plurality of operators and a plurality of RATs, the unlicensed band (or an "unlicensed channel" or the like) is also called shared spectrum. The communication in the unlicensed band is to operate with shared spectrum channel access (operation with shared spectrum channel access). The sidelink communication is direct communication between the terminal devices 40. Therefore, there is a problem that it is difficult to apply the NR-U in the Uu link explained above to the wireless communication system according to the present embodiment.

In particular, in the sidelink communication, control by the base station 20 can be performed. For example, the base station 20 can perform, for example, allocation of resources used for the sidelink communication. As explained above, in a case in which control is performed by the base station 20, it is difficult to directly apply the NR-U in the Uu link explained above to the wireless communication system according to the present embodiment.

### <1.4.2. Overview of a proposed technique>

Therefore, the embodiment of the present disclosure provides a mechanism that can implement the sidelink communication using the unlicensed band.

The transmission device (for example, the first terminal device 40_1) according to the embodiment of the present disclosure performs the sidelink communication with the reception device (for example, the second terminal device 40_2) with the unlicensed band.

The transmission device transmits at least one of the PSCCH and the PSSCH to the reception device using the predetermined sidelink resource within the COT acquired by the predetermined COT acquisition device.

The predetermined COT acquisition device is any one of the base station 20, the transmission device, the reception device, and a communication device. Note that the communication device is a device (another base station 20 or another terminal device 40) other than the base station 20, the transmission device, and the reception device.

Accordingly, the transmission device can perform the sidelink communication with the reception device using the unlicensed band.

### <1.4.3. Definitions>

In the embodiment explained below, among the terminal devices 40 that perform the sidelink communication, the terminal device 40 that transmits at least one of the PSCCH and the PSSCH is also described as transmission device 40T (TxUE 40T).

Among the terminal devices 40 that perform the sidelink communication, the terminal device 40 that receives at least one of the PSCCH and the PSSCH is also referred to as reception device 40R (RxUE 40R). Note that the RxUE 40R transmits a HARQ report concerning the PSSCH to the TxUE 40T via the PSFCH.

When the base station 20 and the terminal device 40 are not distinguished from each other, the base station 20 or the terminal device 40 is also simply described as communication device 10. The communication device 10 can include the TxUE 40T or the RxUE 40R explained above.

A device that performed LBT (CCA, channel access procedure (or simply channel access)) and acquired a COT can be called COT acquisition device or initiating device.

A device with which the COT acquisition device performed COT sharing can be called COT response device or a responding device. A transmission destination and a transmission method of the COT shared by the COT response device are determined by a COT response mode explained below.

For example, the FR1 is defined as a frequency of 450 MHz to 6000 MHz. In particular, the unlicensed band in the FR1 is a band n46 (5150 MHz to 5925 MHz), a band n96 (5925 MHz to 7125 MHz), or a band n102.

For example, the FR2 is defined as a frequency of 24.25 GHz and 71 GHz. The FR2 is a frequency obtained by combining FR2-1 (24.25 GHz to 52.6 GHz) and FR2-2 (52.6 GHz to 71 GHz). Note that the FR2 may be defined as a frequency of 24.25 GHz or more.

### <<2. Configuration of the communication system>>

### <2.1. Configuration example of the base station device>

First, the base station 20 is explained. The base station 20 is a communication device that operates the cell 30 (see FIG. 1) and provides a wireless communication service to one or more terminal devices 40 located on the inside of a coverage of the cell 30. The cell 30 is operated according to any wireless communication scheme such as LTE or NR. The base station 20 is connected to a core network. The core network is connected to a packet data network through a gateway device.

Note that the base station 20 may be configured by a set of a plurality of physical or logical devices. For example, in the embodiment of the present disclosure, the base station 20 may be distinguished into a plurality of devices of a BBU (Baseband Unit) and an RU (Radio Unit) and may be interpreted as an aggregate of the plurality of devices. Further or alternatively, in the embodiment of the present disclosure, the base station 20 may be either or both of the BBU and the RU. The BBU and the RU may be connected by a predetermined interface (for example, an eCPRI). Further or alternatively, the RU may be called Remote Radio Unit (RRU) or Radio DoT (RD). Further or alternatively, the RU may correspond to a gNB-DU explained below. Further or alternatively, the BBU may correspond to a gNB-CU explained below. Alternatively, the RU may be connected to a gNB-DU explained below. Further, the BBU may correspond to a combination of the gNB-CU and the gNB-DU explained below. Further or alternatively, the RU may be a device formed integrally with an antenna. An antenna (for example, the antenna formed integrally with the RU) included in the base station 20 may adopt an Advanced Antenna System and support MIMO (for example, FD-MIMO) and beam forming. In the Advanced Antenna System, an antenna (for example, the antenna formed integrally with the RU) included in the base station 20 may include, for example, 64 transmission antenna ports and 64 reception antenna ports.

A plurality of the base stations 20 may be connected to one another. The one or more base stations 20 may be included in a radio access network (RAN). That is, the base station 20 may be simply called RAN, RAN node, AN (Access Network), or AN node. The RAN in the LTE is called EUTRAN (Enhanced Universal Terrestrial RAN). The RAN in the NR is referred to as NGRAN. The RAN in W-CDMA (UMTS) is referred to as UTRAN. The base station 20 of the LTE is called eNodeB (Evolved Node B) or eNB. That is, the EUTRAN includes one or more eNodeBs (eNBs). The base station 20 of the NR is called gNodeB or gNB. That is, the NGRAN includes one or more of gNBs. Further, the EUTRAN may include the gNB (an en-gNB) connected to a core network (EPC) in an LTE communication system (EPS). Similarly, the NGRAN may include an ng-eNB connected to a core network 5GC in a 5G communications system (5GS). Further or alternatively, when the base station 20 is the eNB, the gNB, or the like, the base station 20 may be called 3GPP Access. Further or alternatively, when the base station 20 is a wireless access point (e. g., an access point of WiFi (registered trademark), the base station 20 may be called Non-3GPP Access. Further or alternatively, the base station 20 may be an optical extension device called RRH (Remote Radio Head). Further or alternatively, when the base station 20 is the gNB, the base station 20 may be called combination of the gNB CU (Central Unit) and the gNB DU (Distributed Unit) or any one of the gNB CU and the gNB DU. The gNB CU (Central Unit) hosts, for communication with the UE, a plurality of upper layers (for example, RRC, SDAP, and PDCP) of an Access Stratum. On the other hand, the gNB-DU hosts a plurality of lower layers (for example, RLC, MAC, and PHY) of the Access Stratum. That is, among messages and information explained below, RRC signalling (for example, various SIBs including MIB and SIB1, an RRCSetup message, and an RRCReconfiguration message) may be generated by the gNB CU and, on the other hand, a DCI and various physical channels (for example, PDCCH and PBCH) explained below may be generated by the gNB-DU. Alternatively, in the RRC signalling, for example, a part of configurations (configuration information) such as IE: cellGroupConfig may be generated by the gNB-DU and the remaining configurations may be generated by the gNB-CU. These configurations (configuration information) may be transmitted and received by an F1 interface explained below. The base station 20 may be configured to be capable of communicating with another base station 20. For example, when a plurality of base stations 20 are combinations of eNBs or eNBs and en-gNBs, the base stations 20 may be connected by an X2 interface. Further or alternatively, when the plurality of base stations 20 are combinations of gNBs or gn-eNBs and gNBs, the devices may be connected by an Xn interface. Further or alternatively, when the plurality of base stations 20 are a combination of gNB CUs (Central Units) and gNB DUs (Distributed Units), the devices may be connected by the F1 interface explained above. A message/information (RRC signalling or DCI information and Physical Channel) explained below may be communicated (for example, via the X2, Xn, or F1 interface) among the plurality of base stations 20.

Further, as explained above, the base station 20 may be configured to manage a plurality of cells. A cell provided by the base station 20 is called Serving cell. The Serving cell includes a PCell (Primary Cell) and an SCell (Secondary Cell). When Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to the UE (for example, the terminal device 40), the PCell and zero or one or more SCell(s) provided by an MN (Master Node) are called Master Cell Group. Further, the Serving cell may include a PSCell (Primary Secondary Cell or Primary SCG Cell). That is, when the Dual Connectivity is provided to the UE, the PSCell and zero or one or more SCell(s) provided by the SN (Secondary Node) are called Secondary Cell Group (SCG). Unless special setting (for example, PUCCH on SCell) is performed, a physical uplink control channel (PUCCH) is transmitted by the PCell and the PSCell but is not transmitted by the SCell. A Radio Link Failure is also detected in the PCell and the PSCell but is not detected in the SCell (may not be detected). As explained above, since the PCell and the PSCell have a special role in the Serving Cell (s), the PCell and the PSCell are also called Special Cells (SpCells). One Downlink Component Carrier and one Uplink Component Carrier may be associated with one cell. A system bandwidth corresponding to one cell may be divided into a plurality of bandwidth parts. In this case, one or more Bandwidth Parts (BWPs) may be set for the UE and one Bandwidth Part may be used for the UE as an Active BWP. Wireless resources (for example, a frequency band, a numerology (subcarrier spacing), and a slot format (a slot configuration)) that can be used by the terminal device 40 may be different for each cell, each component carrier, or each BWP.

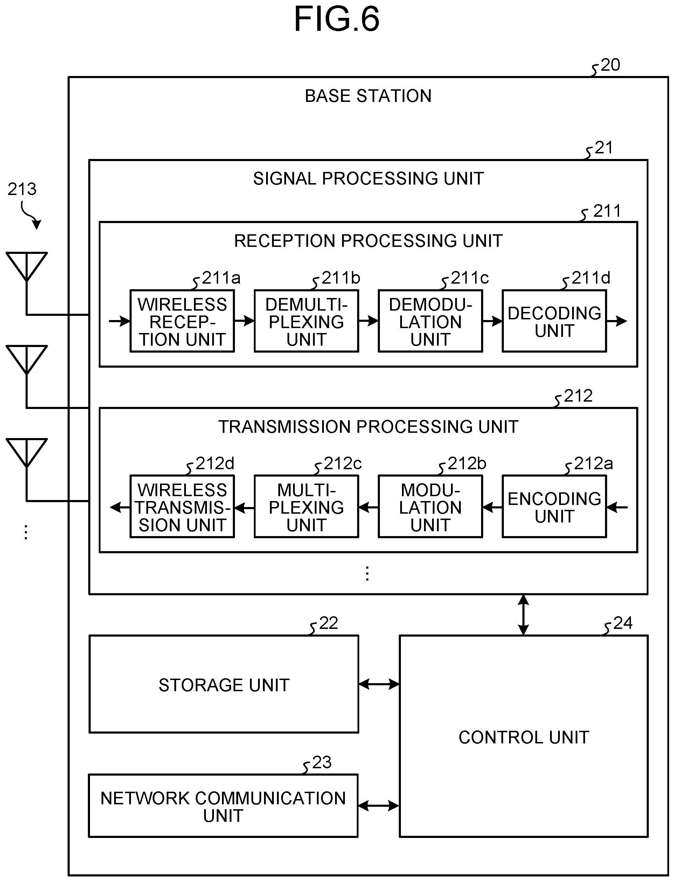

FIG. 6 is a diagram illustrating a configuration example of the base station 20 according to the embodiment of the present disclosure. The base station 20 is a communication device (a wireless system) that wirelessly communicates with the terminal device 40. The base station 20 is a type of an information processing device.

The base station 20 includes a signal processing unit 21, a storage unit 22, a network communication unit 23, and a control unit 24. Note that the configuration illustrated in FIG. 6 is a functional configuration. A hardware configuration may be different from this configuration. The functions of the base station 20 may be implemented to be distributed to a plurality of physically separated devices.

The signal processing unit 21 is a wireless communication interface that wirelessly communicates with other communication devices (for example, the terminal device 40 and another base station 20). The signal processing unit 21 is a wireless transceiver that operates under control of the control unit 24. The signal processing unit 21 may be adapted to a plurality of wireless access schemes. For example, the signal processing unit 21 may be adapted to both of the NR and the LTE. The signal processing unit 21 may be adapted to other cellular communication schemes such as W-CDMA and cdma2000. The signal processing unit 21 may be adapted to a wireless LAN communication scheme in addition to the cellular communication scheme. Naturally, the signal processing unit 21 may be adapted to only one wireless access scheme.

The signal processing unit 21 includes a reception processing unit 211, a transmission processing unit 212, and an antenna 413. The signal processing unit 21 may include a plurality of reception processing units 211, a plurality of transmission processing units 212, and a plurality of antennas 413. Note that, when the signal processing unit 21 is adapted to the plurality of wireless access schemes, the units of the signal processing unit 21 can be configured individually for each of the wireless access schemes. For example, if the base station 20 is adapted to the NR and the LTE, the reception processing unit 211 and the transmission processing unit 212 may be individually configured by the NR and the LTE.

The reception processing unit 211 processes an uplink signal received via the antenna 413. The reception processing unit 211 includes a wireless reception unit 211a, a demultiplexing unit 211b, a demodulation unit 211c, and a decoding unit 211d.

The wireless reception unit 211a performs, on the uplink signal, down-conversion, removal of an unnecessary frequency component, control of an amplification level, quadrature demodulation, conversion into a digital signal, removal of a guard interval, extraction of a frequency domain signal by fast Fourier transform, and the like. For example, it is assumed that the wireless access scheme of the base station 20 is a cellular communication scheme such as the LTE. At this time, the demultiplexing unit 211b demultiplexes an uplink channel such as a PUSCH (Physical Uplink Shared Channel) or a PUCCH (Physical Uplink Control Channel) and an uplink reference signal from a signal output from the wireless reception unit 211a. The demodulation unit 211c demodulates a reception signal using a modulation scheme such as BPSK (Binary Phase Shift Keying) or QPSK (Quadrature Phase Shift Keying) with respect to a modulation symbol of the uplink channel. The modulation scheme used by the demodulation unit 211c may be multi-value QAM such as 16QAM (Quadrature Amplitude Modulation), 64QAM, or 256QAM. The decoding unit 211d performs decode processing on an encoded bit of the demodulated uplink channel. The decoded uplink data and uplink control information are output to the control unit 24.

The transmission processing unit 212 performs transmission processing for downlink control information and downlink data. The transmission processing unit 212 includes an encoding unit 212a, a modulation unit 212b, a multiplexing unit 212c, and a wireless transmission unit 212d.

The encoding unit 212a encodes the downlink control information and the downlink data input from the control unit 24 using an encoding scheme such as block encoding, convolutional encoding, or turbo encoding. The modulation unit 212b modulates coded bits output from the encoding unit 212a with a predetermined modulation scheme such as BPSK, QPSK, 16QAM, 64QAM, or 256QAM. The multiplexing unit 212c multiplexes modulation symbols of channels and a downlink reference signal and arranges the modulation symbols and the downlink reference signal in a predetermined resource element. The wireless transmission unit 212d performs various kinds of signal processing on a signal from the multiplexing unit 212c. For example, the wireless transmission unit 212d performs processing such as conversion into a time domain by fast Fourier transform, addition of a guard interval, generation of a baseband digital signal, conversion into an analog signal, quadrature modulation, up-conversion, removal of an extra frequency component, and power amplification. A signal generated by the transmission processing unit 212 is transmitted from the antenna 413.

The storage unit 22 is a data readable/writable storage device such as a DRAM, an SRAM, a flash memory, or a hard disk. The storage unit 22 functions as storage means of the base station 20.

The network communication unit 23 is a communication interface for communicating with the other devices (for example, the other base stations 20). For example, the network communication unit 23 is a LAN (Local Area Network) interface such as an NIC (Network Interface Card). The network communication unit 23 may be a USB (Universal Serial Bus) interface configured by a USB host controller, a USB port, and the like. The network communication unit 23 may be a wired interface or may be a wireless interface. The network communication unit 23 functions as network communication means of the base station 20. The network communication unit 23 communicates with the other devices under control of the control unit 24.

The control unit 24 is a controller that controls the units of the base station 20. The control unit 24 is implemented by a processor such as a CPU (Central Processing Unit) or an MPU (Micro Processing Unit). For example, the control unit 24 is implemented by the processor executing various programs stored in a storage device inside the base station 20 using a RAM (Random Access Memory) or the like as a work area. Note that the control unit 24 may be implemented by an integrated circuit such as an ASIC (Application Specific Integrated Circuit) or an FPGA (Field Programmable Gate Array). All of the CPU, the MPU, the ASIC, and the FPGA can be regarded as the controller.

### <2.2. Configuration Example of the terminal device>

Next, the terminal device 40 is explained. The terminal device 40 is a communication device that wirelessly communicates with the base station 20 based on control by the base station 20.

The terminal device 40 is a wireless communication device that wirelessly communicates with the other devices. The terminal device 40 is, for example, a sensor or a camera device having a communication function, a mobile phone, a smart device (a smartphone or a tablet terminal), a PDA (Personal Digital Assistant), or a personal computer. The terminal device 40 may be a head mounted display, VR goggles, or the like having a function of wirelessly transmitting and receiving data. The terminal device 40 may be a moving body such as an automobile or a drone.

For example, the terminal device 40 wirelessly communicates with another terminal device 40 based on control by the base station 20 or autonomously. In that case, the terminal device 40 transmits a sidelink signal to the other terminal device 40 and receives a sidelink signal from the other terminal device 40 in the PC 5 link. Transmission and reception of the sidelink signals by the terminal device 40 are collectively described as sidelink communication. When performing the sidelink communication, the terminal device 40 may be capable of using an automatic retransmission technique such as HARQ (Hybrid Automatic Repeat reQuest).

The terminal device 40 may be capable of performing NOMA (Non Orthogonal Multiple Access) communication with the base station 20. Note that the terminal device 40 may also be capable of performing the NOMA communication in communication (sidelink) with the other terminal devices 40. The terminal device 40 may be capable of performing LPWA (Low Power Wide Area) communication with the other communication devices (for example, the base station 20 and the other terminal devices 40). Besides, the wireless communication used by the terminal device 40 may be wireless communication using a millimeter wave or a terahertz wave. Note that the wireless communication (including the sidelink communication) used by the terminal device 40 may be wireless communication using radio waves or wireless communication (optical wireless) using infrared rays or visible light.

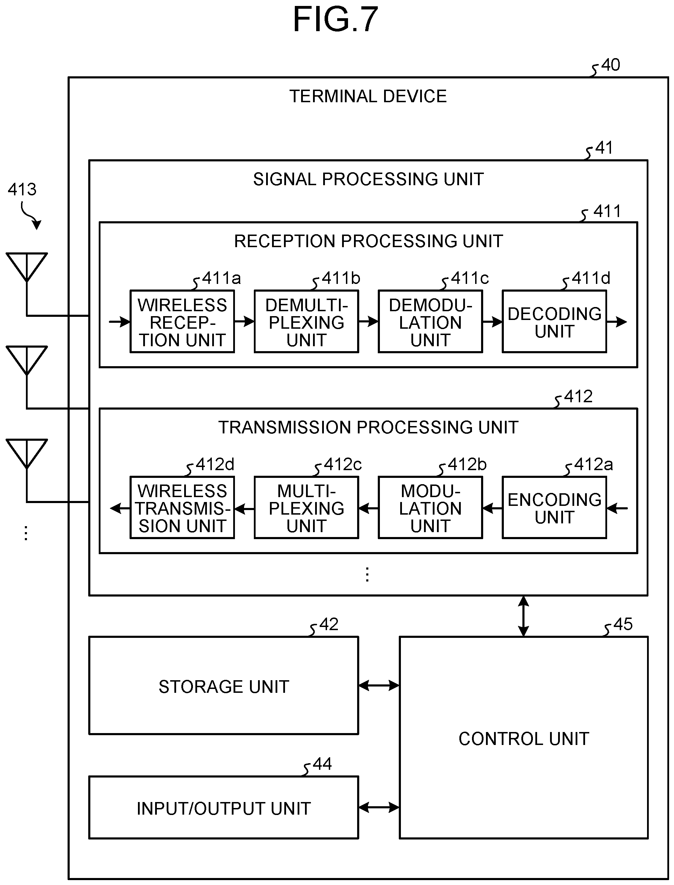

FIG. 7 is a diagram illustrating a configuration example of the terminal device 40 according to the embodiment of the present disclosure. The terminal device 40 is a communication device (a wireless system) that wirelessly communicates with the base station 20. The terminal device 40 is a type of an information processing device.

The terminal device 40 includes a signal processing unit 41, a storage unit 42, an input/output unit 44, and a control unit 45. Note that the configuration illustrated in FIG. 7 is a functional configuration and a hardware configuration may be different from the functional configuration. The functions of the terminal device 40 may be implemented in a distributed manner in a plurality of physically separated components.

The signal processing unit 41 is a wireless communication interface that wirelessly communicates with the other communication devices (for example, the base station 20 and the other terminal devices 40). The signal processing unit 41 is a wireless transceiver that operates according to control of the control unit 45. The signal processing unit 41 is adapted to one or more wireless access schemes. For example, the signal processing unit 41 is adapted to both of the NR and the LTE. The signal processing unit 41 may be adapted to other wireless access schemes such as W-CDMA and cdma2000.

The signal processing unit 41 includes a reception processing unit 411, a transmission processing unit 412, and an antenna 413. The signal processing unit 41 may include a plurality of reception processing units 411, a plurality of transmission processing units 412, and a plurality of antennas 413. Note that, when the signal processing unit 41 is adapted to a plurality of wireless access schemes, the units of the signal processing unit 41 can be configured individually for each of the wireless access schemes. For example, the reception processing unit 411 and the transmission processing unit 412 may be individually configured by the LTE and the NR. The configurations of the reception processing unit 411 and the transmission processing unit 412 are the same as the configurations of the reception processing unit 211 and the transmission processing unit 212 of the base station 20.

The storage unit 42 is a data readable/writable storage device such as a DRAM, an SRAM, a flash memory, or a hard disk. The storage unit 42 functions as storage means of the terminal device 40.

The input/output unit 44 is a user interface for exchanging information with the user. For example, the input/output unit 44 is an operation device for the user to perform various kinds of operation, such as a keyboard, a mouse, an operation key, or a touch panel. Alternatively, the input/output unit 44 is a display device such as a liquid crystal display or an organic EL (electroluminescence) display. The input/output unit 44 may be an acoustic device such as a speaker or a buzzer. The input/output unit 44 may be a lighting device such as an LED (Light Emitting Diode) lamp. The input/output unit 44 functions as input/output means(input means, output means, operation means, or notification means) of the terminal device 40.

The control unit 45 is a controller that controls the units of the terminal device 40. The control unit 45 is implemented by a processor such as a CPU or an MPU. For example, the control unit 45 is implemented by the processor executing various programs stored in a storage device inside the terminal device 40 using a RAM or the like as a work area. Note that the control unit 45 may be implemented by an integrated circuit such as an ASIC or an FPGA. All of the CPU, the MPU, the ASIC, and the FPGA can be regarded as the controller.

### <<3. Technical features>>

### <3.1. COT response modes>

In the embodiment of the present disclosure, a plurality of COT response modes are defined. A method of a COT response device performing transmission using a shared COT, a restriction in the transmission, and the like are defined by the COT response modes.

The COT response modes are configured by the base station 20 according to, for example, conditions explained below. Alternatively, the COT response modes are pre-configured according to the conditions explained below.
· Frequency used for transmission and reception
· Regulations established by areas and countries where transmission and reception are performed
· Operation policy of a network operator operating a system

Note that examples of a frequency used for transmission and reception include the FR1 or the FR2 and a 5/6 GHz band, and a 60 GHz band.

The setting of the COT response mode can be notified to the plurality of terminal devices 40 as control information common to the cells 30. Alternatively, the setting of the COT response mode can be individually notified as control information specific to the terminal device 40 or the terminal group.

The setting of the COT response modes can be semi-statically performed by signaling of an RRC layer or signaling of an MAC layer. Alternatively, the setting of the COT response modes may be dynamically performed by signaling of the L1 layer (the PDCCH, the PUCCH, the PSCCH, and the like).

### <3.1.1. First COT response mode>

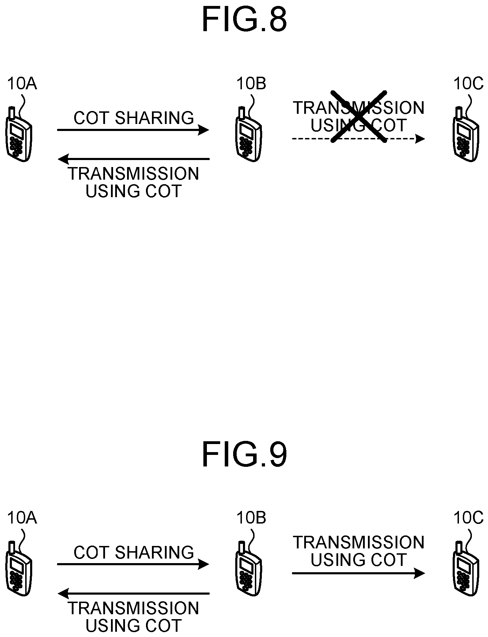

FIG. 8 is a diagram for explaining an example of a first COT response mode according to the embodiment of the present disclosure. In FIG. 8, a communication device 10A is a COT acquisition device. The communication device 10A performs COT sharing with a communication device 10B. That is, the communication device 10B is a COT response device.

As illustrated in FIG. 8, the communication device 10B can perform transmission to the communication device 10A, which is the COT acquisition device, using a shared COT (COT). On the other hand, the communication device 10B cannot perform transmission to a communication device 10C other than the COT acquisition device using the shared COT.

As explained above, the COT response device sharing the COT can perform transmission using the shared COT to the COT acquisition device sharing the COT. On the other hand, the COT response device cannot perform transmission using the shared COT to devices other than the COT acquisition device sharing the COT.

Note that, when the COT acquisition device is one of the base station 20 and the terminal device 40 and the COT response device is the other of the base station 20 and the terminal device 40, the first COT response mode is the same as the COT sharing method used in the Uu link of the NR-U explained above.

On the other hand, the embodiment of the present disclosure is different from the method used in the Uu link of the NR-U explained above in that the COT acquisition device may be the first terminal device 40_1 and the COT response device may be the second terminal device 40_2.

In the present embodiment, the terminal device 40 performs the sidelink communication by sharing the COT. The first COT response mode according to the present embodiment is a mode in which the COT is shared between the COT acquisition device and the COT response device and the COT response device performs the Uu link communication or the sidelink communication with the COT acquisition device. The sidelink communication performed here is communication using a sidelink resource within the COT.

### <3.1.2. Second COT response mode>

FIG. 9 is a diagram for explaining an example of a second COT response mode according to the embodiment of the present disclosure. In FIG. 9, the communication device 10A is a COT acquisition device. The communication device 10A performs COT sharing with the communication device 10B. That is, the communication device 10B is a COT response device.

As illustrated in FIG. 9, the communication device 10B can perform transmission to the communication device 10A, which is the COT acquisition device, using the shared COT. Further, the communication device 10B can perform transmission to the communication device 10C other than the COT acquisition device using the shared COT. That is, the communication device 10B sharing the COT can perform transmission using the COT to any communication device 10 including the communication device 10A that has acquired the COT.

As explained above, the COT response device sharing the COT can perform transmission using the COT shared by any communication device 10 including the COT acquisition device sharing the COT.

The second COT response mode is different from the first COT response mode in that the COT response device can transmit a signal to the communication device 10 other than the COT acquisition device sharing the COT.

In the embodiment of the present disclosure, the second COT response mode is a mode in which the COT is shared between the COT acquisition device and the COT response device and the COT response device performs the Uu link communication or the sidelink communication with the COT acquisition device and the other devices. The sidelink communication performed here is communication using a sidelink resource within the COT.

Note that, as the second response mode, a transmission method (transmission restriction) can be defined (specified or set) according to whether a transmission destination of the communication device 10B is the communication device 10A or the communication device 10C. That is, a transmission method (transmission restriction) corresponding to whether the destination of the COT response device is the COT acquisition device can be specified.

As an example, the transmission restriction can be a set LBT category (CAT: Channel access type).

For example, when the transmission destination of the communication device 10B is the communication device 10A, an LBT category used in the second COT response mode is the same as the LBT category used in the first COT response mode.

For example, when the transmission destination of the communication device 10B is other than the communication device 10A (for example, the communication device 10C), the LBT category used in the second COT response mode is an LBT category stricter than the first COT response mode in terms of the length, the number of times, and the like of CCA (for example, the length of the CCA (duration in which the CCA is performed) and the number of times of the CCA (the number of times of the CCA in a predetermined period) are large).

Specifically, when the transmission destination of the communication device 10B is the communication device 10A, the Type 2C channel access can be used in the second COT response mode. On the other hand, when the transmission destination of the communication device 10B is other than the communication device 10A (for example, the communication device 10C), the Type 2C channel access is not used in the second COT response mode. In this case, for example, the Type 2A or Type 2B channel access is used in the second COT response mode. CATs other than the Type 2A or Type 2B channel access are not used.

As another example, the transmission restriction can be a transmittable time length.

For example, when the transmission destination of the communication device 10B is the communication device 10A, a transmittable time length of the second COT response mode is the same as the transmittable time length (the maximum COT and the maximum channel occupancy time) of the first COT response mode.

For example, when the transmission destination of the communication device 10B is other than the communication device 10A (for example, the communication device 10C), the transmittable time length of the second COT response mode is shorter than the transmittable time length of the first COT response mode.

As another example, the transmission restriction can be transmission power.

For example, when the transmission destination of the communication device 10B is the communication device 10A, transmission power in the second COT response mode is the same as the transmission power in the first COT response mode.

For example, when the transmission destination of the communication device 10B is other than the communication device 10A (for example, the communication device 10C), transmission power transmittable in the second COT response mode is lower than the transmission power transmittable in the first COT response mode.

### <3.2. COT sharing mode>

In the embodiment of the present disclosure, a plurality of COT sharing modes are defined. A method of sharing an acquired COT, a restriction in sharing, and the like are defined by the COT sharing modes.

The COT sharing modes are set by the base station 20 according to, for example, conditions explained below. Alternatively, the COT sharing modes are pre-configured according to the conditions explained below.
· Frequency used for transmission and reception
· Regulations established by areas and countries where transmission and reception are performed
· Operation policy of a network operator operating a system

Note that examples of a frequency used for transmission and reception include the FR1 or the FR2 and a 5/6 GHz band, and a 60 GHz band.

Note that the COT sharing mode may be set separately from or in combination with the COT response mode explained above. When the COT sharing mode and the COT response mode are respectively set, the modes that can be set can be limited. For example, when the COT sharing mode 2 is set, the COT response mode 2 is set (that is, the COT response mode 1 is not set.). In other words, when the COT response mode 1 is set, the COT sharing mode 2 cannot be set. In other words, one of the plurality of COT sharing modes may be correlated with a predetermined one of the plurality of COT response modes.

The setting of the COT sharing mode can be notified to the plurality of terminal devices 40 as control information common to the cells 30. Alternatively, the setting of the COT sharing mode can be individually notified as control information specific to the terminal device 40 or the terminal group.

The setting of the COT sharing mode can be semi-statically performed by signaling of the RRC layer or signaling of the MAC layer. Alternatively, the setting of the COT response modes may be dynamically performed by signaling of the L1 layer (the PDCCH, the PUCCH, the PSCCH, and the like).

### <3.2.1. First COT sharing mode>

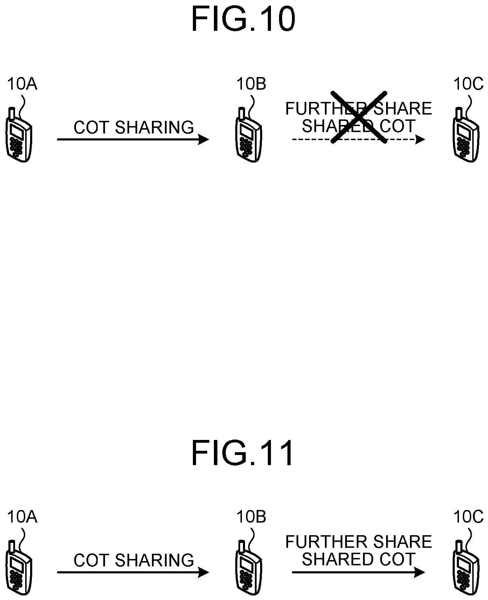

FIG. 10 is a diagram for explaining an example of the first COT sharing mode according to the embodiment of the present disclosure. In FIG. 10, the communication device 10A is the COT acquisition device. The communication device 10A performs COT sharing with the communication device 10B. That is, the communication device 10B is a COT response device.

As illustrated in FIG. 10, the communication device 10A can share a COT with the communication device 10B that is the COT response device. On the other hand, the communication device 10B cannot further share a part or all of the shared COT with the communication device 10C other than the COT acquisition device. That is, the communication device 10 capable of sharing the COT is limited to the communication device 10A which is the COT acquisition device.

As explained above, the COT acquisition device that has acquired the COT can share the COT with the COT response device. On the other hand, the COT response device cannot share at least a part of the COT with a device other than the COT acquisition device. As explained above, in the first COT sharing mode, sharing of the COT with a device other than the COT response device and the COT acquisition device is restricted.

When the COT acquisition device is one of the base station 20 and the terminal device 40 and the COT response device is the other of the base station 20 and the terminal device 40, the first COT sharing mode is the same as the COT sharing performed on the Uu link of the NR-U explained above.

On the other hand, the embodiment of the present disclosure is different from the COT sharing performed on the Uu link of the NR-U explained above in that the COT acquisition device may be the first terminal device 40_1 and the COT response device may be the second terminal device 40_2.

As explained above, the first COT sharing mode according to the present embodiment is not limited to the Uu link communication and is a mode in which the COT is shared between the COT acquisition device and the COT response device in the sidelink communication as well.

### <3.2.2. Second COT sharing mode>

FIG. 11 is a diagram for explaining an example of the second COT sharing mode according to the embodiment of the present disclosure. In FIG. 11, the communication device 10A is the COT acquisition device. The communication device 10A performs COT sharing with the communication device 10B. That is, the communication device 10B is a COT response device.

As explained above, in the second COT sharing mode as well, as in the first COT sharing mode, the communication device 10A that is the COT acquisition device can perform COT sharing with the communication device 10B that is the COT response device. Further, in the second COT sharing mode, the communication device 10B can further share, with another communication device 10C, the COT shared with the communication device 10A. In other words, the COT acquired by the COT acquisition device can be relayed among the plurality of communication devices 10.

The second COT sharing mode is different from the first COT sharing mode in that the COT response device can share the COT shared by the COT acquisition device with another communication device 10. In the second COT sharing mode, both of the COT acquisition device and the COT response device can perform the COT sharing.

In the embodiment of the present disclosure, the second COT response mode is a mode in which a COT is shared between the COT acquisition device and the COT response device and the COT is shared between the COT response device and another device (for example, the communication device 10C).

Note that, in the second COT sharing mode, the number of times of relay (the number of times of hop) of the COT can be limited to a predetermined number of times. The number of times of relay of the COT is, for example, the number of times that another device functions as the COT response device and performs the COT sharing. For example, the number of times of relay of the COT can be one at most.

For example, in FIG. 11, the COT acquired by the communication device 10A can be shared by the communication device 10B. Accordingly, the communication device 10B functions as the COT response device (hereinafter also referred to as first COT response device.).

The communication device 10B can share the COT with a communication device 10B different from the communication device 10A that is the COT acquisition device. Accordingly, the communication device 10C functions as the COT response device (hereinafter also referred to as second COT response device.).

However, when the number of times of relay of the COT is one at most, the communication device 10C, which is the second COT response device, cannot share the COT with other devices. As explained above, the number of times of sharing (the number of times of relay) of the COT can be limited.

Note that, when sharing the COT, the device (for example, the communication device 10A or 10B) that notifies the COT sharing may notify the number of times of relay of the COT to the device (for example, the communication devices 10B or 10C) that receives the notification of the COT sharing. For example, when notifying the COT sharing, the device that notifies the COT sharing notifies information indicating the number of times of relay (the number of times of hop) of the COT to be shared. Accordingly, the device that receives the notification of the COT sharing can recognize whether the COT can be further shared.

Note that the number of times of relay of the COT is not limited to one and may be two or more.

As the second sharing mode, a transmission method (transmission restriction) can be defined (specified or set) according to the number of times the COT was relayed. That is, the transmission method (restriction) can be specified according to whether the device that relayed the COT is the COT acquisition device (the number of times of relay: 0), the first COT response device (the number of times of relay: 0), or the second COT response device (the number of times of relay: 1).

As an example, the transmission restriction can be a set LBT category (CAT: Channel access type).

For example, an LBT category used in a device whose relay count is 0, that is, a COT acquisition device, is the same as an LBT category used in a COT acquisition device in the first COT response mode. Similarly, an LBT category used in a device, the number of times of relay of which is 0, that is, the first COT response device, is the same as an LBT category used in the COT response device in the first COT response mode.

For example, the LBT category used in the device, the number of times of relay of which is one, that is, the second COT response device, is a stricter LBT category than the device, the number of times of relay of which is zero, that is, the COT acquisition device and the first response device in terms of the length, the number of times, and the like of the CCA.

Specifically, the Type 2C channel access can be used in the first COT response device. On the other hand, the Type 2C channel access is not used in the second COT response device. In this case, for example, the Type 2A or Type 2B channel access is used in the second COT response device. CATs other than the Type 2A or Type 2B channel access are not used.

As explained above, in the second sharing mode, the LBT category can be specified as the transmission method (restriction) according to the number of times of relay of the COT. For example, as the number of times of relay of the COT increases, a strict LBT category can be applied in terms of, for example, the length and number of times of the CCA.

As another example, the transmission restriction can be a transmittable time length.

For example, the transmittable time length of the device, the number of times of relay of which is zero, that is, the COT acquisition device, is the same as the transmittable time length of the COT acquisition device in the first COT response mode. Similarly, a transmittable time length of a device, the number of times of relay of which is zero, that is, the first COT response device, is the same as the transmittable time length of the COT response device in the first COT response mode.

For example, the transmittable time length of the device, the number of times of relay of which is one, that is, the second COT response device, is shorter than the transmittable time length of the device, the number of times of relay of which is zero, that is, the COT acquisition device and the first response device.

As explained above, in the second sharing mode, the transmittable time length can be specified as the transmission method (restriction) according to the number of times of relay of the COT. For example, a shorter time length can be applied as the transmittable time length as the number of times of relay of the COT increases.

As another example, the transmission restriction can be transmission power.

For example, transmittable transmission power of the device, the number of times of relay of which is zero, that is, the COT acquisition device, is the same as transmittable transmission power of the COT acquisition device in the first COT response mode. Similarly, transmittable transmission power of the device, the number of times of relay of which is zero, that is, the first COT response device, is the same as transmittable transmission power of the COT response device in the first COT response mode.

For example, transmittable transmission power of the device, the number of times of relay of which is one, that is, the second COT response device, is lower than transmittable transmission power of the device, the number of times of relay of which is zero, that is, the COT acquisition device and the first response device.

As explained above, in the second sharing mode, the transmission power can be specified as the transmission method (restriction) according to the number of times of relay of the COT. For example, lower transmission power can be applied as the number of times of relay of the COT increases.

### <3.3. Sidelink HARQ-ACK report method>

In the sidelink communication (in particular, Unicast or Groupcast), the RxUE 40R that receives the PSSCH transmitted from the TxUE 40T transmits HARQ-ACK to the TxUE 40T and/or the base station 20. The HARQ-ACK is information indicating whether the SL-SCH (sidelink-Shared channel), an SL codeword, or an SL transport block included in the PSSCH has been correctly received.

When the RxUE 40R transmits a HARQ-ACK report to the TxUE 40T, the HARQ-ACK report is transmitted using the PSFCH that is a sidelink resource. When the RxUE 40R transmits a HARQ-ACK report to the base station 20, the HARQ-ACK report is transmitted using the PUCCH that is an uplink resource.

Here, when a sidelink resource allocation mode 1 is configured, that is, when the base station 20 selects a sidelink resource, the HARQ-ACK report of the RxUE 40R can be transmitted to either the TxUE 40T or the base station 20.

To which of the TxUE 40T or the base station 20 the RxUE 40R transmits the HARQ-ACK report (the PSFCH or the PUCCH or the sidelink or the uplink) can be selected according to the configuration.

In addition, when a sidelink resource allocation mode 2 is configured, that is, when the TxUE 40T and/or the RxUE 40R selects a sidelink resource, the configuration can be restricted such that the HARQ-ACK report of the RxUE 40R is transmitted to the TxUE 40T and is not transmitted to the base station 20. In other words, in the sidelink resource allocation mode 2, the TxUE 40T or the RxUE 40R does not assume that a channel used for the HARQ-ACK report of the RxUE 40R is set to be the PUCCH.

In addition, when the TxUE 40T has a function of receiving the PUCCH, the HARQ-ACK report to the TxUE 40T can be performed using the PUCCH. When the base station 20 has a function of receiving the PSFCH, the HARQ-ACK report to the base station 20 can be performed using the PSFCH. In both the cases, the RxUE 40R may not recognize a transmission destination (a receiving device) of the PUCCH or the PSFCH.

In the present embodiment, a case in which the HARQ-ACK report of the RxUE 40R is transmitted using the PSFCH is explained. However, the present proposed technology can also be applied even when the HARQ-ACK report is transmitted using the PUCCH.

When the PUCCH is used for the HARQ-ACK report to the TxUE 40T, the PUCCH may be transmitted in either the licensed band or the unlicensed band.

In the explanation of the present embodiment, unless particularly explained otherwise, it is assumed that the COT acquired by the COT acquisition device is used for the TxUE 40T to transmit the PSSCH to the RxUE 40R. The COT used to transmit the PSFCH or the PUCCH for the RxUE 40R to perform the HARQ-ACK report is assumed to be the same as the COT used by the TxUE 40T but may be a COT different from the COT used by the TxUE 40T.

Here, the HARQ-ACK report is controlled for each predetermined number of HARQ processes. A certain PSFCH can include HARQ-ACKs in all HARQ processes that can be reported at least at that point in time. At that time, the HARQ-ACK report can be transmitted while including an HARQ process number to be HARQ-reported.

As the HARQ report, HARQ-ACK information corresponding to all the HARQ processes may be always transmitted in a bitmap format. In that case, the HARQ report also includes HARQ-ACK information that does not need to be reported. In this case, a reception side (the TxUE 40T or the base station 20) ignores the unnecessary information.

The HARQ-ACK information transmitted by a certain PSFCH is determined according to capability of a processing time of the RxUE 40R and a time from PSSCH reception completion timing to PSFCH transmission start timing.

For example, it is assumed that the RxUE 40R receives a predetermined PSSCH and transmits the PSFCH including HARQ-ACK information for the PSSCH. A time from the PSSCH reception completion timing to the PSFCH transmission start timing is represented as t1 and a processing time concerning the HARQ report of the RxUE 40R is represented as t2. Note that the time here includes not only a real time but also time in units of symbols, slots, subframes, radio frames, and the like. Further or alternatively, the unit of time here may be s (seconds), ms (milliseconds), us (microseconds).

At this time, when t1 is t2 or more (t1≥t2), the RxUE 40R transmits HARQ-ACK information for the PSSCH while including the HARQ-ACK information in the PSFCH. On the other hand, when t1 is less than t2 (t1<t2), the RxUE 40R may not transmit the HARQ-ACK information for the PSSCH while including the HARQ-ACK in the PSFCH (the transmission is not expected). In that case, the HARQ-ACK information for the PSSCH can be transmitted by the next PSFCH.

Note that, when t1 is the same as t2 (t1=t2), the RxUE 40R may not transmit the HARQ-ACK information for the PSSCH while including the HARQ-ACK information in the PSFCH (the transmission is not expected). That is, when t1 is larger than t2 (t1>t2), the RxUE 40R transmits the HARQ-ACK information for the PSSCH while including the HARQ-ACK information in the PSFCH. On the other hand, when t1 is t2 or less (t1≤t2), the RxUE 40R may not transmit the HARQ-ACK information for the PSSCH while including the HARQ-ACK information in the PSFCH.

As a method of transmitting the PSFCH resource for the RxUE 40R to perform the HARQ-ACK report, two methods of a first HARQ-ACK report mode and a second HARQ-ACK report mode are conceivable. The first HARQ-ACK report mode is, for example, a method in which a PSFCH resource is semi-statically determined. The second HARQ-ACK report mode is, for example, a method in which a PSFCH resource is dynamically determined.

### <3.3.1. First HARQ-ACK report mode>

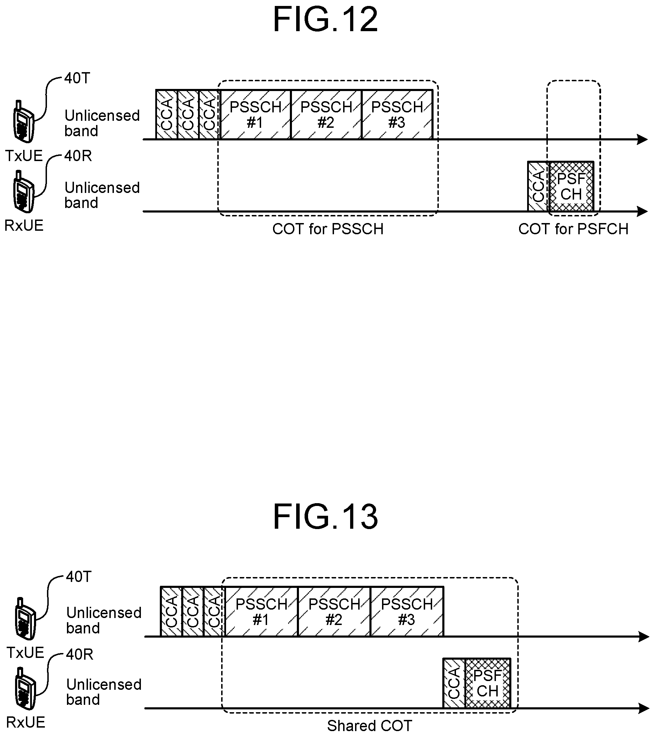

FIG. 12 is a diagram for explaining an example of the first HARQ-ACK report mode according to the embodiment of the present disclosure. In the example illustrated in FIG. 12, in the unlicensed band, the TxUE 40T performs the CCA a predetermined number of times (three times in FIG. 12) and thereafter transmits the PSSCH (In FIG. 12, PSSCHs #1 to #3) using a COT ("COT for PSSCH" in FIG. 12) used for the PSSCH.

The RxUE 40R transmits the HARQ-ACK report corresponding to the PSSCHs #1 to #3 on the PSFCH in the unlicensed band.

Here, in the first HARQ-ACK report mode, the PSFCH resource is set in advance as a periodic resource in a time direction through RRC signaling or MAC signaling. The RxUE 40R performs the HARQ-ACK report using the periodic PSFCH resource.

As illustrated in FIG. 12, in the first HARQ-ACK report mode, a COT ("COT for PSFCH" in FIG. 12) used to transmit the PSFCH is different from the COT ("COT for PSSCH" in FIG. 12) used in the PSSCH received by the RxUE 40R. The RxUE 40R can individually acquire the COT (an example of another COT) for transmitting the PSFCH. Alternatively, as the COT for transmitting the PSFCH, a COT shared by the base station 20 or the TxUE 40T can be used. Details of the above is explained below.

### (RxUE 40R individually acquires the COT)

The RxUE 40R that transmits the PSFCH individually acquires the COT for transmitting the PSFCH. In this case, a channel access type of the COT for transmitting the PSFCH is different from a channel access type of the COT for transmitting the PSSCH.

For example, the Type 1 channel access is used in the COT for transmitting the PSSCH. On the other hand, the Type 2 channel access or the Type 3 channel access is used in the COT for transmitting the PSFCH.

When the PSSCH transmission is performed in the FR1, the Type 2A or Type 2B channel access is used. A maximum transmission time (a maximum number of transmission symbols) of the PSFCH is set. Note that, in FR1, the Type 2C channel access can be restricted from being used in the first HARQ-ACK report mode.

Alternatively, the channel access type of the COT for transmitting the PSFCH may be the same as the channel access type of the COT for transmitting the PSSCH.

For example, when the Type 1 channel access is used in the COT for transmitting the PSSCH, the Type 1 channel access is also used in the COT for transmitting the PSFCH.

In particular, when the PSFCH exceeds a transmittable time in the Type 2A or 2B channel access (that is, when the number of symbols of the PFCH is larger than a predetermined number of symbols), the Type 1 channel access is used.

### (TxUE 40T or base station 20 acquires the COT)

The COT for transmitting the PSFCH is shared by the TxUE 40T or the base station 20. That is, the RxUE 40R transmits the PSFCH using the COT shared by the TxUE 40T or the base station 20.

In this case, the RxUE 40R receives, from the base station 20 or the TxUE 40T, information indicating whether the PSFCH can be transmitted with a preset PSFCH resource (whether a COT including the resource is shared). For example, the information is transmitted from the base station 20 through the PDCCH.

If the information can be transmitted, the RxUE 40R performs the HARQ report with the PSFCH resource. On the other hand, when the information cannot be transmitted, the RxUE 40R does not use the PSFCH resource and performs the HARQ report with the subsequent transmittable PSFCH resources.

Note that, in the first HARQ-ACK report mode, when a set PSFCH resource (PSFCH occasion) overlaps a resource with which the RxUE 40R is receiving the PSSCH, one of the following operations is performed. The operation may be specified in advance or may be set through the RRC signaling.
(1) The RxUE 40R cancels transmission of the PSFCH performed using the set PSFCH resource. The HARQ-ACK to be reported by the PSFCH can be transmitted by the subsequent PSFCHs. That is, reception of the PSSCH is prioritized.
(2) The RxUE 40R cancels the reception of the PSSCH overlapping the set PSFCH resource. That is, transmission of the PSFCH is prioritized.
(3) The above (1) and (2) are determined based on a predetermined condition. For example, the predetermined condition is priority (priority information). For example, whether the transmission of the PSFCH is prioritized is determined according to whether priority (priority information) for the PSFCH (or the reported HARQ-ACK) is higher or lower compared with predetermined priority.

### <3.3.2. Second HARQ-ACK report mode>

FIG. 13 is a diagram for explaining an example of the second HARQ-ACK report mode according to the embodiment of the present disclosure. In the example illustrated in FIG. 13, in the unlicensed band, the TxUE 40T performs the CCA a predetermined number of times (three times in FIG. 12) and thereafter transmits the PSSCH (In FIG. 12, the PSSCHs #1 to #3) to the RxUE 40R. The RxUE 40R transmits the HARQ-ACK report corresponding to the PSSCHs #1 to #3 on the PSFCH in the unlicensed band.

Here, in the second HARQ-ACK report mode, a PSFCH resource is dynamically determined. For example, as illustrated in FIG. 13, the PSFCH resource can be allocated subsequent to a received PSSCH. The PSFCH resource is notified by control information (the PDCCH or the PSCCH) received from the base station 20 or the TxUE 40T.

The COT to transmit the PSFCH is preferably the same as the COT to transmit the PSSCH (for example, "shared COT" in FIG. 13). However, the RxUE 40R may not recognize whether these COTs are the same. In other words, the RxUE 40R is not expected to recognize whether these COTs are the same. Note that the "shared COT" in FIG. 13 means a COT used in common by the TxUE 40T and the RxUE 40R. For example, the COT acquired by the TxUE 40T can be shared by the RxUE 40R.

Examples of information concerning the PSFCH resource include the following information.
· Information indicating transmission start timing of the PSFCH (a slot number or a symbol number)
· Frequency information of the PSFCH (a subchannel number, a frequency number, or resource block number)
· The number of consecutively transmitted PSSCHs (the number of PSSCHs transmitted within the COT)
· Information concerning the COT used to transmit the PSSCH and/or the PSFCH
· Information indicating a channel access type of the PSFCH transmission
· The number of symbols of the PSFCH

The information indicating the transmission start timing of the PSFCH may be relative information (the number of slots or the number of symbols) from a resource of a predetermined PSSCH.

When the frequency resource of the PSFCH is implicitly determined as the frequency resource of the received PSSCH, the frequency information of the PSFCH may not be transmitted.

The channel access type of the PSFCH transmission is different from a channel access type of the PSSCH transmission. For example, any one of Type 2A, Type 2B, and Type 2C channel accesses is used as the channel access type of the PSFCH transmission.

In the present embodiment, the case in which there is one PSFCH is explained. However, the number of PSFCHs is not limited to one. When transmitting a plurality of pieces of HARQ-ACK information (that is, HARQ-ACK information exceeding one bit) for a plurality of PSSCHs, the RxUE 40R may multiplex and transmit the plurality of pieces of HARQ-ACK information using one PSFCH. Alternatively, the TxUE 40R may multiplex and transmit a plurality of pieces of HARQ-ACK information using a plurality of PSFCHs. When transmitting the plurality of pieces of HARQ-ACK information using a plurality of PSFCHs, the RxUE 40R can perform code division multiplexing on the plurality of PSFCHs that use different orthogonal codes of the same time and frequency resources. When transmitting the plurality of pieces of HARQ-ACK information using the plurality of PSFCHs, the RxUE 40R can perform time division multiplexing on the PSFCHs of consecutive time resources using the same frequency resource.

### <<4. Application examples>>

In the following explanation, a case in which the technique according to the present embodiment is applied to the sidelink communication is explained. The sidelink communication includes the sidelink resource allocation mode 1 in which the base station 20 selects a sidelink resource and the sidelink resource allocation mode 2 in which the TxUE 40T selects a sidelink resource. In application examples explained below, a case in which the technique according to the present embodiment is applied for each of the modes is explained.

In the case of the sidelink resource allocation mode 1, since the base station 20 allocates the sidelink resource, Uu link communication is performed between the base station 20 and the terminal device 40. In the application examples explained below, a case in which the Uu link communication is performed in the unlicensed band and a case in which the Uu link communication is performed in the licensed band are distinguished and explained.

In the present embodiment, the TxUE 40T transmits one or more PSSCHs and/or PSCCHs to the RxUE 40R using a COT acquired by a predetermined device. Using the COT or another COT, the RxUE 40R performs a HARQ-ACK report for a received PSSCH (SL-SCH) to the TxUE 40T or the base station 20 using the PSFCH or the PUCCH. In the application examples explained below, a case in which the PSFCH is used is explained. However, the same can be applied to a case in which the PUCCH is used.

For example, the RxUE 40R determines, based on control information (for example, a HARQ-ACK report channel mode) indicating a channel used for the HARQ-ACK report, whether to perform the HARQ-ACK report on the PSFCH or the PUCCH.

Note that the HARQ-ACK report channel mode for the RxUE 40R can be set by the RRC signaling or the like from the base station 20 or the TxUE 40T. Alternatively, the HARQ-ACK report channel mode for the RxUE 40R may be pre-configured.

A mode of performing the HARQ-ACK report on the PUCCH may be limited to be configured only in the case of the sidelink resource allocation mode 1.

When the RxUE 40R performs the HARQ-ACK report on the PUCCH, the PUCCH may be transmitted by the licensed band or may be transmitted by the unlicensed band. For example, in the sidelink resource allocation mode 1, the PUCCH is the same frequency band (licensed band or unlicensed band) as a DCI received by the TxUE 40T from the base station 20.

In the application examples explained below, it is assumed that the TxUE 40T transmits the PSSCH to the RxUE 40R. However, the TxUE 40T may transmit the PSCCH to the RxUE 40R in addition to the PSSCH. The PSCCH includes control information for scheduling the PSSCH. The RxUE 40R monitors the PSCCH and, when detecting control information addressed to the RxUE 40R, performs reception processing for the PSSCH based on the detected control information.

In the application examples explained below, redundant explanation of processing is omitted.

### <4.1. Sidelink resource allocation mode 1>

### <4.1.1. Case in which the Uu link is the unlicensed band>

### <4.1.1.1. Application example 1-1 (A case in which the COT acquisition device is the base station)>

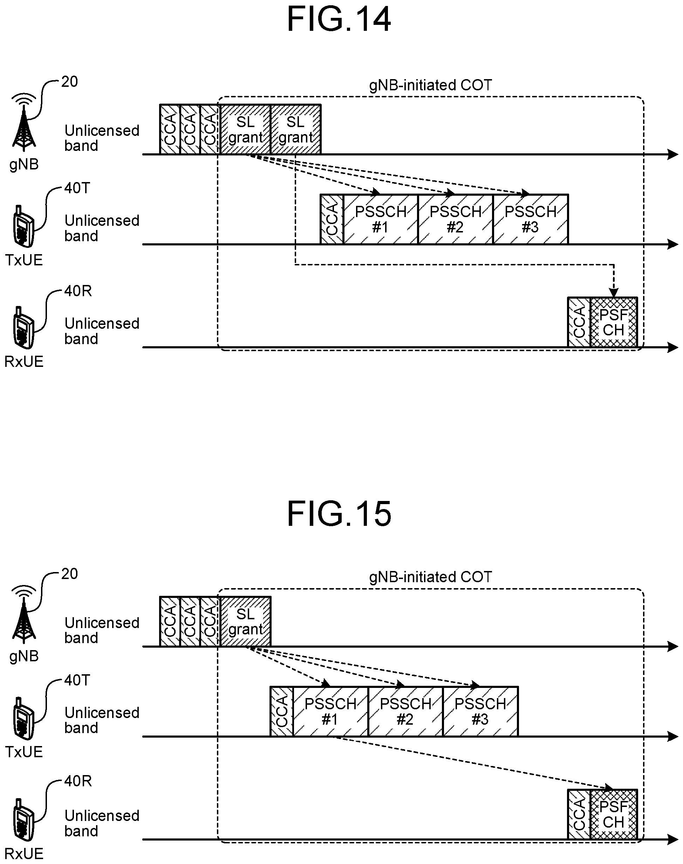

FIG. 14 is a diagram illustrating an example of sidelink communication according to an application example 1-1 of the embodiment of the present disclosure. FIG. 14 illustrates a case in which the base station 20 is the gNB.

Here, a case in which the sidelink communication is in the sidelink resource allocation mode 1, the Uu link is the unlicensed band, and the COT acquisition device is the base station 20 (a gNodeB-initiated COT) is explained.

In this application example, the sidelink communication is performed between devices (here, the TxUE 40T and the RxUE 40R) other than the base station 20, which is the COT acquisition device. For that reason, this application example is suitable for the second COT response mode. When this application example is implemented, it is desirable that the first COT response mode is restricted not to be configured.

In this application example, the base station 20 is the COT acquisition device. The base station 20 shares an acquired COT with the TxUE 40T and/or the RxUE 40R.

In the following explanation, examples of the sidelink communication are respectively explained according to the COT sharing modes to be set.

### (First COT sharing mode)

In this case, as illustrated in FIG. 14, the base station 20 transmits a PDCCH including an SL grant (CDI: Downlink Control Information) to each of the TxUE 40T and the RxUE 40R in the acquired COT.

The SL grant for the TxUE 40T includes control information for scheduling the PSSCH (the PSSCH #1 to #3 in FIG. 14) from the TxUE 40T to the RxUE 40R as indicated by dotted arrows in FIG. 14.

Note that, here, the base station 20 collectively schedules a plurality of PSSCHs #1 to #3 using one SL grant. However, a scheduling method by the base station 20 is not limited to this. For example, the base station 20 may individually transmit SL grants for scheduling the PSSCHs #1 to #3.

As indicated by the dotted arrows in FIG. 14, the SL grant for the RxUE 40R includes control information for scheduling a PSFCH resource for performing a HARQ report (HARQ-ACK report) for the PSSCH.

Note that the base station 20 can individually transmit the PDCCH including the SL grant to each of the TxUE 40T and the RxUE 40R. Alternatively, the base station 20 can transmit a PDCCH including an SL grant common to the TxUE 40T and the RxUE 40R.

The TxUE 40T transmits, based on the SL grant from the base station 20, one or more PSSCHs to the RxUE 40R within the COT acquired by the base station 20. The RxUE 40R transmits, within the COT acquired by the base station 20, the HARQ-ACK for the PSSCH on the PSFCH based on the SL grant received from the base station 20.

As explained above, the wireless communication system operates in the second COT response mode (see FIG. 9), whereby the TxUE 40T and the RxUE 40R can perform the sidelink communication using the COT acquired by the base station 20.

### (Second COT sharing mode)

FIG. 15 is a diagram illustrating another example of the sidelink communication according to the application example 1-1 of the embodiment of the present disclosure. FIG. 15 illustrates a case in which the base station 20 is the gNB. Here, it is assumed that the base station 20 is the COT acquisition device. The base station 20 shares the acquired COT with the TxUE 40T. The base station 20, the TxUE 40T, and the RxUE 40R illustrated in FIG. 15 operate in the second COT sharing mode.

In the second COT sharing mode, the TxUE 40T can further share, with the RxUE 40R, the COT shared by the base station 20 (see FIG. 11). Therefore, here, it is assumed that the TxUE 40T further shares, with the RxUE 40R, the COT shared by the base station 20.

For that reason, as illustrated in FIG. 15, it is not necessary to transmit the SL grant (the control information for scheduling the PSFCH) from the base station 20 to the RxUE 40R. The PSFCH is scheduled by the TxUE 40T.

In the example illustrated in FIG. 15, the TxUE 40T transmits control information for scheduling the PSFCH using the PSSCH #1 to the RxUE 40R. The control information for scheduling the PSFCH can be transmitted using the PSCCH or the PSSCH transmitted by the TxUE 40T.

### <4.1.1.2. Application example 1-2 (A case in which the COT acquisition device is the TxUE 40T)>

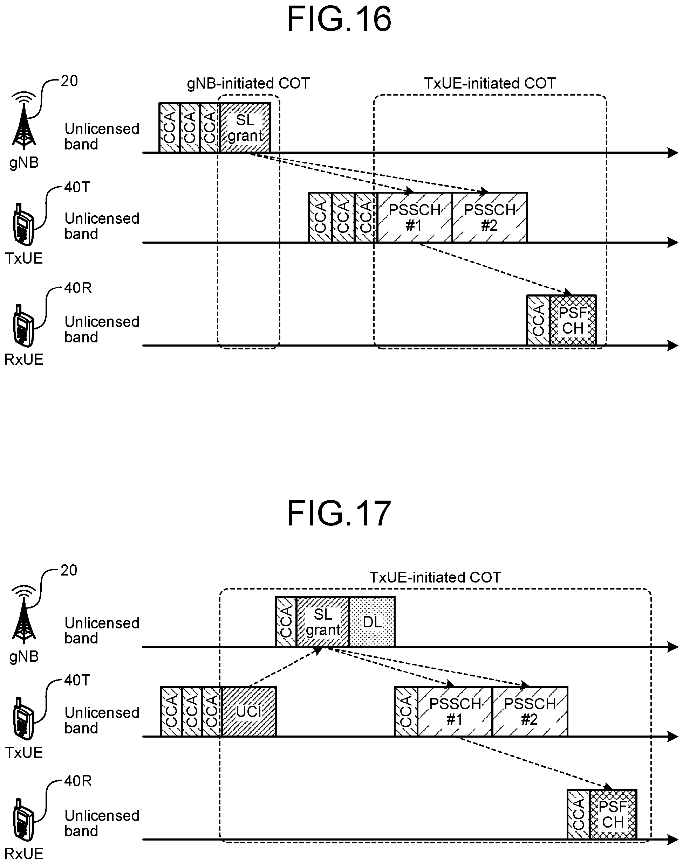

FIG. 16 is a diagram illustrating an example of sidelink communication according to an application example 1-2 of the embodiment of the present disclosure. FIG. 16 illustrates a case in which the base station 20 is the gNB.

Here, a case in which the sidelink communication is in the sidelink resource allocation mode 1, the Uu link is the unlicensed band, and the COT acquisition device is the TxUE 40T (TxUE-initiated COT) is explained.

In FIG. 16, the TxUE 40T is the COT acquisition device. The TxUE 40T shares the acquired COT with the RxUE 40R. The Uu link is the unlicensed band. Therefore, when an SL grant is transmitted from the base station 20, the base station 20 individually acquires a COT for transmitting the SL grant. As explained above, here, both of the TxUE 40T and the base station 20 serve as the COT acquisition device.

The sidelink communication illustrated in FIG. 16 is suitable for both of the first COT response mode and the second COT response mode. The sidelink communication illustrated in FIG. 16 is suitable for both of the first COT sharing mode and the second COT sharing mode.

As illustrated in FIG. 16, the base station 20 acquires a COT (a gNB-initiated COT). The base station 20 transmits the PDCCH including the DCI to the TxUE 40T in the acquired COT.

The SL grant for the TxUE 40T includes control information for scheduling the PSSCH (the PSSCHs #1 and #2 in FIG. 16) from the TxUE 40T to the RxUE 40R as indicated by dotted arrows in FIG. 16.

The SL grant (the control information) from the base station 20 to the TxUE 40T includes control information concerning the PSSCH explained above, control information concerning the COT acquired (acquirable) by the TxUE 40T, and the like. The control information concerning the COT acquired (acquirable) by the TxUE 40T can include, for example, information explained below.
· Information concerning channel access required for COT acquisition
· The number of CCAs
· CW size
· Information concerning COT acquirable time domain resources
· Information concerning COT acquirable frequency domain resources (a channel number, a center frequency number, a frequency bandwidth, and the like in the unlicensed band)

The information concerning COT acquirable time domain resources includes, for example, a subframe number, a slot number, a system frame number, a symbol number, and the like. The information concerning COT acquirable frequency domain resources includes a channel number, a center frequency number, a frequency bandwidth, and the like in the unlicensed band. The information concerning COT acquirable time domain resources and/or the information concerning COT acquirable frequency domain resources can include information concerning a plurality of resources as a list of COT acquirable resources.

The TxUE 40T performs channel access based on the control information from the base station 20 and acquires a COT (a TxUE 40T-initiated COT). The TxUE 40T transmits one or more PSSCHs (the PSSCHs #1 and #2 in FIG. 16) to the RxUE 40R using the acquired COT. Here, it is assumed that the TxUE 40T transmits control information for scheduling the PSFCH using the PSSCH #1 to the RxUE 40R.

The RxUE 40R that has received the PSSCHs #1 and #2 transmits, based on control information included in the PSSCH #1, a HARQ report using the COT (the TxUE 40T-initiated COT) acquired by the TxUE 40T. This HARQ report is a HARQ report (a HARQ-ACK report) for the PSSCHs #1 and #2 and is transmitted to the TxUE 40T using the PSFCH.

FIG. 17 is a diagram illustrating another example of the sidelink communication according to the application example 1-2 of the embodiment of the present disclosure. FIG. 17 illustrates a case in which the base station 20 is the gNB.

In FIG. 17, the TxUE 40T is the COT acquisition device. The TxUE 40T shares the acquired COT with the RxUE 40R and the base station 20. As explained above, the example illustrated in FIG. 17 is different from the sidelink communication in the unlicensed band of FIG. 16 in that the TxUE 40T serves as the COT acquisition device and the base station 20 serves as the COT response device.

The sidelink communication illustrated in FIG. 17 is suitable for both of the first COT response mode and the second COT response mode. The sidelink communication illustrated in FIG. 17 is suitable for both of the first COT sharing mode and the second COT sharing mode.

First, the TxUE 40T performs channel access and acquires a COT. The TxUE 40T transmits UCI (Uplink Control Information) through an uplink such as the PUCCH or the PUSCH. The UCI includes information concerning the COT acquired by the TxUE 40T.

The base station 20 transmits an SL grant to the TxUE 40T using the COT acquired by the TxUE 40T. The SL grant can include control information for scheduling the PSSCH and information concerning transmission permission using the COT acquired by the TxUE 40T. The subsequent sidelink communication is the same as the sidelink communication illustrated in FIG. 16.

Note that, when a free time occurs from when the base station 20 transmits the SL grant until when the TxUE 40T transmits the PSSCH, the base station 20 transmits a predetermined DL signal in the free time. The DL signal only has to be a signal for preventing a channel from coming into an idle state. The base station 20 can transmit, as the DL signal, signals for various uses such as a dummy signal, a synchronization signal, and a notification signal including control information that can be notified.

Here, the base station 20 transmits the SL grant using the COT acquired by the TxUE 40T. However, the COT used by the base station 20 to transmit the SL grant is not limited to the COT acquired by the TxUE 40TUE. The base station 20 may perform channel access in order to acquire the SL grant illustrated in FIG. 17 to acquire the COT. In this case, the base station 20 transmits the SL grant to the TxUE 40T using the COT acquired by the base station 20.

In the sidelink communication illustrated in FIG. 17, when the second COT sharing mode is configured, the base station 20 may share the COT (the TxUE 40T-initiated COT) shared by the TxUE 40T to the communication device 10 different from the TxUE 40T. For example, the base station 20 can transmit control information for scheduling the PSSCH to another communication device 10 (not illustrated) using the COT shared by the TxUE 40T and further shared with another communication device 10.

### <4.1.1.3. Application example 1-3 (A case in which the COT acquisition device is the RxUE 40R)>

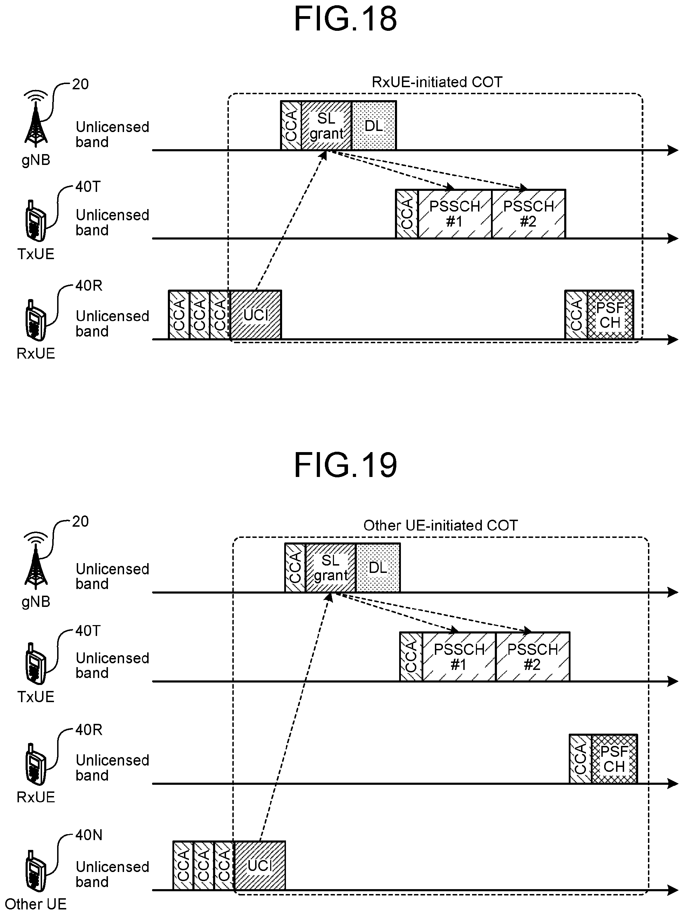

FIG. 18 is a diagram illustrating an example of sidelink communication according to an application example 1-3 of the embodiment of the present disclosure. FIG. 18 illustrates a case in which the base station 20 is the gNB.

Here, a case in which the sidelink communication is in the sidelink resource allocation mode 1, the Uu link is the unlicensed band, and the COT acquisition device is the RxUE 40R (an RxUE-initiated COT) is explained.

In FIG. 18, the RxUE 40R is the COT acquisition device. The RxUE 40R shares the acquired COT with the base station 20. The Uu link is the unlicensed band.
Therefore, when the SL grant is transmitted from the base station 20, the base station 20 further shares the COT acquired by the RxUE 40R with the TxUE 40T in order to transmit the SL grant.

The sidelink communication illustrated in FIG. 18 is communication suitable for the second COT response mode and the second COT sharing mode. In the sidelink communication illustrated in FIG. 18, it is desirable that the first COT response mode and the first COT sharing mode are restricted not to be configured.

First, the RxUE 40R performs channel access and acquires a COT. The RxUE 40R transmits a UCI through an uplink such as the PUCCH or the PUSCH. The UCI includes information on the COT acquired by the RxUE 40R.

The base station 20 transmits the SL grant to the TxUE 40T using the COT acquired by the RxUE 40R. The SL grant can include control information for scheduling the PSSCH and information concerning transmission permission using the COT acquired by the RxUE 40R. The subsequent sidelink communication is the same as the sidelink communication illustrated in FIG. 17.

Note that, here, the base station 20 transmits the SL grant to the TxUE 40T using the COT acquired by the RxUE 40R. However, the COT used by the base station 20 to transmit the SL grant is not limited to the COT acquired by the RxUE 40R. The base station 20 may perform channel access to acquire the SL grant illustrated in FIG. 18 to acquire the COT. In this case, the base station 20 transmits the SL grant to the TxUE 40T using the COT acquired by the base station 20.

Note that, in the sidelink communication illustrated in FIG. 18, it is desirable that the first COT response mode and the first COT sharing mode are restricted not to be configured. However, the first COT response mode and the first COT sharing mode may be configured.

For example, the scheduling of the PSSCH is performed by the base station 20. However, a COT used when the RxUE 40R transmits the PSSCH is shared. Accordingly, the first COT response mode and the first COT sharing mode can be configured in the sidelink communication in this application example. In this case, for example, the RxUE 40R receives the SL grant from the base station 20 and notifies (relays) the scheduling information of the PSSCH to the TxUE 40T based on the SL grant.

### <4.1.1.4. Application example 1-4 (A case in which the COT acquisition device is another communication device 40N) >

In the application examples 1-1 to 1-3 explained above, the case in which any one of the base station 20 that selects the sidelink resource, the TxUE 40T that performs the sidelink communication, and the RxUE 40R acquires the COT is explained. That is, in the application examples 1-1 to 1-3 explained above, the communication device 10 relating to the sidelink communication acquires the COT used for the sidelink communication.

However, the COT acquisition device that acquires the COT used for the sidelink communication is not limited to the communication device 10 relating to the sidelink communication. For example, the communication device 10 not relating to the sidelink communication can acquire the COT used for the sidelink communication.

That is, the communication device 10 other than the base station 20 that selects the sidelink resource, the TxUE 40T that performs the sidelink communication, and the RxUE 40R can acquire the COT. The COT acquired by the other communication device 10 is used to transmit the SL grant to the TxUE 40T by the base station 20. The COT acquired by the other communication device 10 is used in the sidelink communication of the TxUE 40T and the RxUE 40R.

Note that a case in which the other communication device 10 is the terminal device 40 (hereinafter also described as other UE 40N) is explained below. However, the other communication device 10 may be the base station 20. In this case, the base station 20 (hereinafter also described as other base station 20) is different from the base station 20 that allocates the sidelink resources.

FIG. 19 is a diagram illustrating an example of sidelink communication according to the application example 1-4 of the embodiment of the present disclosure. FIG. 19 illustrates a case in which the base station 20 is the gNB.

Here, a case in which the sidelink communication is in the sidelink resource allocation mode 1, the Uu link is the unlicensed band, and the COT acquisition device is the other UE 40N (the other UE-initiated COT) is explained.

The sidelink communication illustrated in FIG. 19 is suitable for the second COT response mode and the second COT sharing mode. In the sidelink communication illustrated in FIG. 19, it is desirable that the first COT response mode and the first COT sharing mode are restricted not to be configured.

First, the other UE 40N performs channel access and acquires a COT. The other UE 40N transmits a UCI through the uplink such as the PUCCH or the PUSCH. The UCI includes information concerning the COT acquired by the other UE 40N.

The base station 20 transmits the SL grant to the TxUE 40T using the COT acquired by the other UE 40N. The SL grant can include control information for scheduling the PSSCH and information concerning transmission permission using the COT acquired by the other UE 40N. The subsequent sidelink communication is the same as the sidelink communication illustrated in FIG. 17.

Note that, here, the base station 20 transmits the SL grant to the TxUE 40T using the COT acquired by the other UE 40N. However, the COT used by the base station 20 to transmit the SL grant is not limited to the COT acquired by the other UE 40N. For example, the base station 20 may perform channel access to acquire the SL grant illustrated in FIG. 19 to acquire the COT. In this case, the base station 20 transmits the SL grant to the TxUE 40T using the COT acquired by the base station 20.

Here, it is assumed that the other UE 40N, which is the terminal device 40, acquires the COT. However, as explained above, the COT acquisition device that acquires the COT may be the other base station 20. In this case, the other base station 20 that has acquired the COT can transmit information concerning the acquired COT via a wired line (an X2 interface).

### <4.1.2. A case in which the Uu link is the licensed band>

In the application examples 1-1 to 1-4 explained above, the Uu link communication between the TxUE 40T or the RxUE 40R and the base station 20 is the communication in the unlicensed band. However, the Uu link communication may be communication in the licensed band.

### <4.1.2.1. Application example 2-1 (A case in which the COT acquisition device is the base station)>

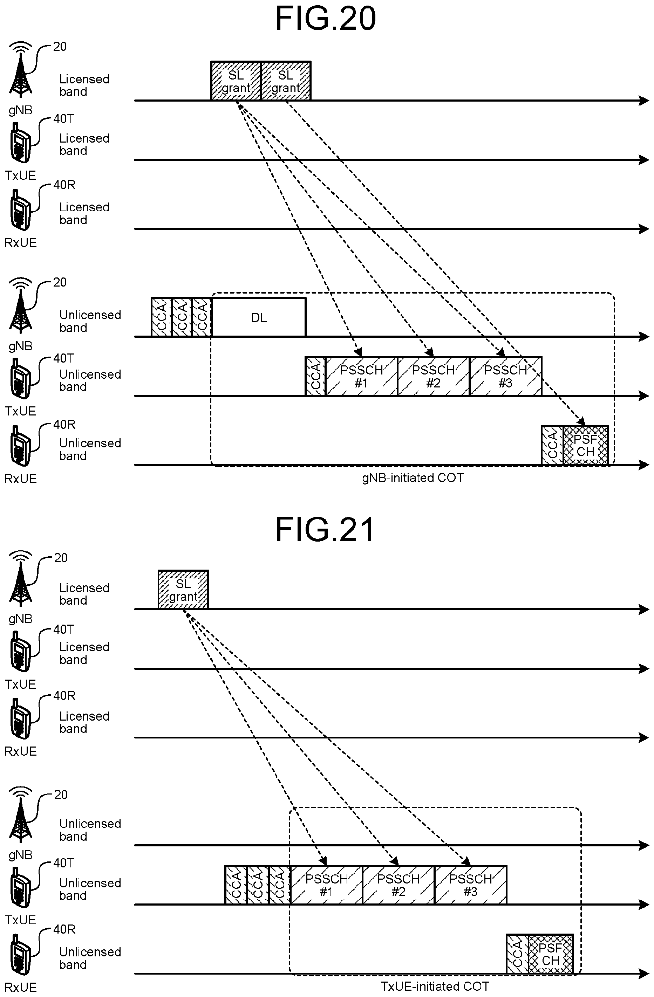

FIG. 20 is a diagram illustrating an example of sidelink communication according to an application example 2-1 of the embodiment of the present disclosure. FIG. 20 illustrates a case in which the base station 20 is the gNB.

An upper figure of FIG. 20 illustrates Uu link communication in the licensed band performed between the TxUE 40T or the RxUE 40R and the base station 20. A lower figure of FIG. 20 illustrates communication (for example, sidelink communication) in the unlicensed band performed between the TxUE 40T or the RxUE 40R and the base station 20.

The base stations 20 illustrated in the upper figure and the lower figure of FIG. 20 are the same base station. The TxUEs 40T illustrated in the upper figure and the lower figure of FIG. 20 are the same terminal device 40. The RxUEs 40R illustrated in the upper figure and the lower figure of FIG. 20 are the same terminal device 40. As explained above, the base station 20, the TxUE 40T, and the RxUE 40R illustrated in FIG. 20 perform communication in both of the licensed band and the unlicensed band.

Here, a case in which the sidelink communication is in the sidelink resource allocation mode 1, the Uu link is a licensed band, and the COT acquisition device is the base station 20 (a gNodeB-initiated COT) is explained. Note that, in FIG. 20, explanation of the same communication processing as the communication processing illustrated in FIGS. 14 and 15 is omitted.

In this application example, the sidelink communication is performed between devices (here, the TxUE 40T and the RxUE 40R) other than the base station 20, which is the COT acquisition device. For that reason, this application example is suitable for the second COT response mode. When this application example is implemented, it is desirable that the first COT response mode is restricted not to be configured.

The base station 20 performs channel access in the unlicensed band to acquire a COT. The base station 20 transmits the SL grant to the TxUE 40T in the licensed band and schedules the PSSCH (the PSSCHs #1 to #3 in FIG. 20).

The base station 20 transmits the SL grant to the RxUE 40R in the licensed band and schedules the PSFCH. Note that, as in the sidelink communication illustrated in FIG. 15, when the second COT sharing mode is configured, the control information for transmitting the PSFCH can be transmitted from the TxUE 40T to the RxUE 40R.

The base station 20 transmits a DL signal using the unlicensed band in a period in which the SL grant is transmitted to the TxUE 40T and the RxUE 40R using the licensed band. The DL signal only has to be a signal for preventing a channel from coming into an idle state. The base station 20 can transmit, as the DL signal, signals for various uses such as a dummy signal, a synchronization signal, and a notification signal including control information that can be notified. In this case, the base station 20 has a function of simultaneously transmitting signals (for example, the SL grant and the DL signal) in different frequency bands (for example, the licensed band and the unlicensed band).

Here, the RxUE 40R transmits the HARQ-ACK report for the received PSSCH on the PSFCH. However, as explained above, the RxUE 40R can transmit the HARQ-ACK report on the PUCCH. In this case, the RxUE 40R can transmit this PUCCH in the licensed band. The same applies to application examples 2-2 to 2-4 explained below.

### <4.1.2.2. Application example 2-2 (A case in which the COT acquisition device is the TxUE 40T)>

FIG. 21 is a diagram illustrating an example of sidelink communication according to an application example 2-2 of the embodiment of the present disclosure. FIG. 21 illustrates a case in which the base station 20 is the gNB.

An upper figure of FIG. 21 illustrates Uu link communication in the licensed band performed between the TxUE 40T or the RxUE 40R and the base station 20. A lower figure of FIG. 21 illustrates communication (for example, sidelink communication) in the unlicensed band performed between the TxUE 40T or the RxUE 40R and the base station 20.

The base stations 20 illustrated in the upper figure and the lower figure of FIG. 21 are the same base station. The TxUEs 40T illustrated in the upper figure and the lower figure of FIG. 21 are the same terminal device 40. The RxUEs 40R illustrated in the upper figure and the lower figure of FIG. 21 are the same terminal device 40. As explained above, the base station 20, the TxUE 40T, and the RxUE 40R illustrated in FIG. 21 perform communication in both of the licensed band and the unlicensed band.

Here, a case in which the sidelink communication is in the sidelink resource allocation mode 1, the Uu link is the licensed band, and the COT acquisition device is the TxUE 40T (the TxUE-initiated COT) is explained. Note that, in FIG. 21, explanation of the same communication processing as the communication processing illustrated in FIG. 16 is omitted.

The sidelink communication illustrated in FIG. 21 is suitable for both of the first COT response mode and the second COT response mode. The sidelink communication illustrated in FIG. 21 is suitable for both of the first COT sharing mode and the second COT sharing mode.

First, the base station 20 transmits the SL grant to the TxUE 40T in the licensed band and schedules the PSSCH (the PSSCHs #1 to #3 in FIG. 21).

The TxUE 40T performs channel access and acquires a COT. The TxUE 40T transmits the PSSCHs #1 to #3 to the RxUE 40R at a timing scheduled by the base station 20 in the acquired COT.

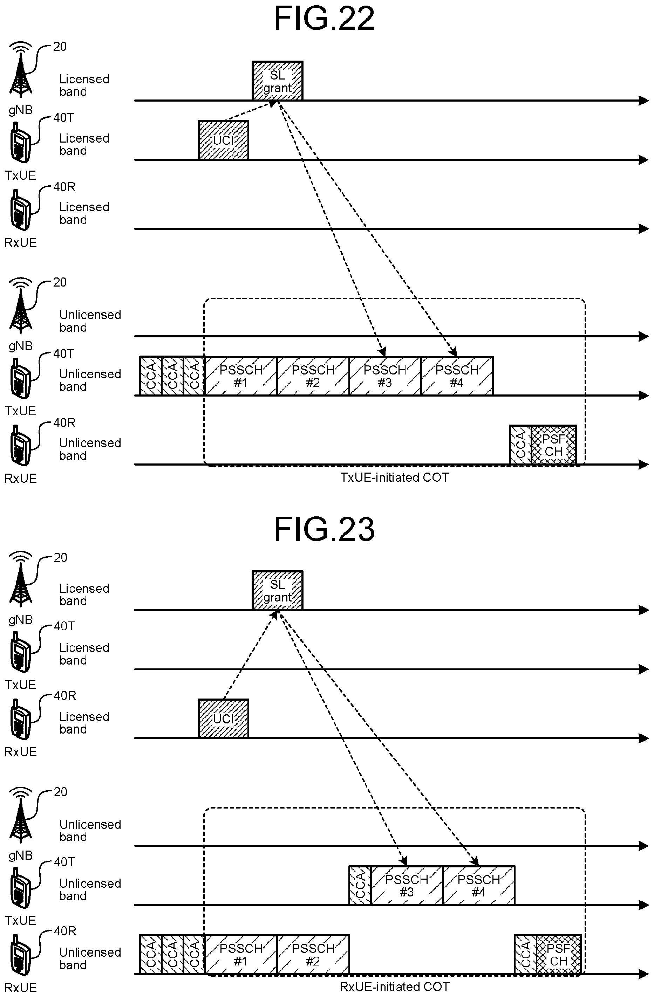

FIG. 22 is a diagram illustrating another example of the sidelink communication according to the application example 2-2 of the embodiment of the present disclosure. FIG. 22 illustrates a case in which the base station 20 is the gNB.

An upper figure of FIG. 22 illustrates Uu link communication in the licensed band performed between the TxUE 40T or the RxUE 40R and the base station 20. A lower figure of FIG. 22 illustrates communication (for example, sidelink communication) in the unlicensed band performed between the TxUE 40T or the RxUE 40R and the base station 20.

The base stations 20 illustrated in the upper figure and the lower figure of FIG. 22 are the same base station. The TxUEs 40T illustrated in the upper figure and the lower figure of FIG. 22 are the same terminal device 40. The RxUEs 40R illustrated in the upper figure and the lower figure of FIG. 22 are the same terminal device 40. As explained above, the base station 20, the TxUE 40T, and the RxUE 40R illustrated in FIG. 22 perform communication in both of the licensed band and the unlicensed band.

Note that, in FIG. 22, explanation of the same communication processing as the communication processing illustrated in FIG. 17 is omitted.

The TxUE 40T performs channel access and acquires a COT. The TxUE 40T transmits a UCI through an uplink such as the PUCCH or the PUSCH in the licensed band. The UCI includes information concerning the COT acquired by the TxUE 40T.

The base station 20 transmits the SL grant to the TxUE 40T using the licensed band. The SL grant can include control information for scheduling the PSSCH and information concerning transmission permission using the COT acquired by the TxUE 40T.

In FIG. 22, the base station 20 performs scheduling of the PSSCHs #3 and # 4 using the SL grant. The PSSCHs #1 and #2 are scheduled by another SL grant before the SL grant transmitted by the base station 20. Alternatively, the PSSCHs #1 and #2 are semi-statically scheduled by RRC signaling such as a Configured grant.

The TxUE 40T can transmit a predetermined signal using the PSSCHs #1 and #2. The predetermined signal only has to be a signal for preventing a channel from coming into an idle state. Examples of the predetermined signal include signals transmitted for various purposes such as a dummy signal, a sidelink synchronization signal, and a notification signal including a control signal that can be notified. The PSSCHs #1, #2 may be transmitted in the sidelink resource allocation mode 2.

As explained above, in FIG. 22, the TxUE 40T transmits the UCI to the base station 20 using the licensed band. The base station 20 transmits the SL grant to the TxUE 40T using the licensed band. For that reason, compared with the case illustrated in FIG. 17, the TxUE 40T can transmit the UCI without being affected by channel access. The base station 20 can transmit the SL grant without being affected by channel access.

### <4.1.2.3. Application example 2-3 (A case in which the COT acquisition device is the RxUE 40R)>

FIG. 23 is a diagram illustrating an example of sidelink communication according to an application example 2-3 of the embodiment of the present disclosure. FIG. 23 illustrates a case in which the base station 20 is the gNB.

An upper figure of FIG. 23 illustrates Uu link communication in the licensed band performed between the TxUE 40T or the RxUE 40R and the base station 20. A lower figure of FIG. 23 illustrates communication (for example, sidelink communication) in the unlicensed band performed between the TxUE 40T or the RxUE 40R and the base station 20.

The base stations 20 illustrated in the upper figure and the lower figure of FIG. 23 are the same base station. The TxUEs 40T illustrated in the upper figure and the lower figure of FIG. 23 are the same terminal device 40. The RxUEs 40R illustrated in the upper figure and the lower figure of FIG. 23 are the same terminal device 40. As illustrated above, the base station 20, the TxUE 40T, and the RxUE 40R illustrated in FIG. 23 perform communication using both of the licensed band and the unlicensed band.

Here, a case in which the sidelink communication is in the sidelink resource allocation mode 1, the Uu link is a licensed band, and the COT acquisition device is the RxUE 40R (the RxUE-initiated COT) is explained. Note that, in FIG. 23, explanation of the same communication processing as the communication processing illustrated in FIG. 18 is omitted.

The RxUE 40R performs channel access and acquires a COT. The RxUE 40R transmits a UCI through an uplink such as the PUCCH or the PUSCH in the licensed band. The UCI includes information on the COT acquired by the RxUE 40R.

The base station 20 transmits the SL grant to the TxUE 40T using the licensed band. The SL grant can include control information for scheduling the PSSCH and information concerning transmission permission using the COT acquired by the RxUE 40R.

In FIG. 23, the base station 20 performs scheduling of the PSSCHs #3 and # 4 using the SL grant. The PSSCHs #1 and #2 are scheduled by another SL grant before the SL grant transmitted by the base station 20. Alternatively, the PSSCHs #1 and #2 are semi-statically scheduled by RRC signaling such as a Configured grant.

In FIG. 23, the RxUE 40R can transmit a predetermined signal using the PSSCHs #1 and #2. The predetermined signal only has to be a signal for preventing a channel from coming into an idle state. Examples of the predetermined signal include signals transmitted for various purposes such as a dummy signal, a sidelink synchronization signal, and a notification signal including a control signal that can be notified. The PSSCHs #1, #2 may be transmitted in the sidelink resource allocation mode 2.

As explained above, in FIG. 23, the RxUE 40R transmits a UCI to the base station 20 using the licensed band. The base station 20 transmits the SL grant to the TxUE 40T using the licensed band. Therefore, compared with the case illustrated in FIG. 18, the RxUE 40R can transmit the UCI without being affected by channel access. The base station 20 can transmit the SL grant without being affected by channel access.

### <4.1.2.4. Application example 2-4 (A case in which the COT acquisition device is another communication device 40N) >

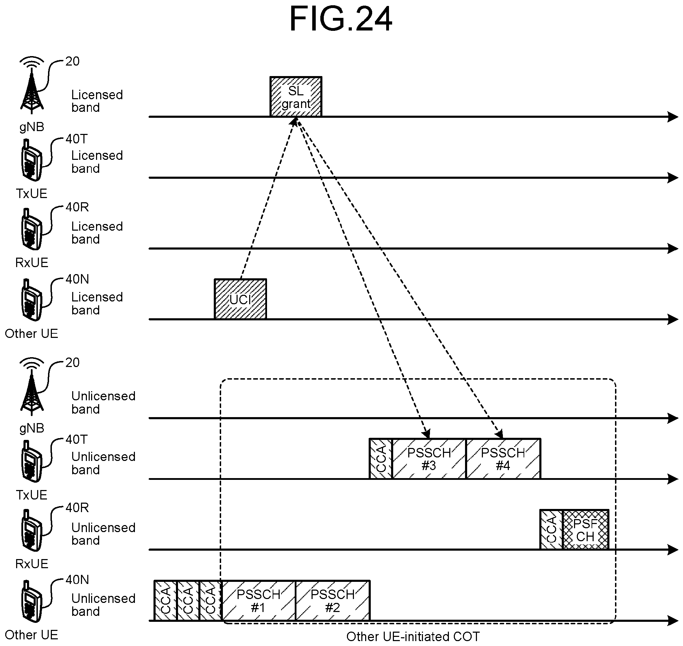

FIG. 24 is a diagram illustrating an example of sidelink communication according to an application example 2-4 of the embodiment of the present disclosure. FIG. 24 illustrates a case in which the base station 20 is the gNB.

An upper figure of FIG. 24 illustrates Uu link communication in the licensed band performed among the TxUE 40T or the RxUE 40R, the base station 20, and another UE 40N. A lower figure of FIG. 24 illustrates communication (for example, sidelink communication) in the unlicensed band performed among the TxUE 40T or the RxUE 40R, the base station 20, and the other UE 40N.

The base stations 20 illustrated in the upper figure and the lower figure of FIG. 24 are the same base station. The TxUEs 40T illustrated in the upper figure and the lower figure of FIG. 23 are the same terminal device 40. The RxUEs 40R illustrated in the upper figure and the lower figure of FIG. 24 are the same terminal device 40. Other UEs 40N illustrated in the upper figure and the lower figure of FIG. 24 are the same terminal device 40. As explained above, the base station 20, the TxUE 40T, the RxUE 40R, and the other UE 40N illustrated in FIG. 24 perform communication in both of the licensed band and the unlicensed band.

Here, a case in which the sidelink communication is in the sidelink resource allocation mode 1, the Uu link is the licensed band, and the COT acquisition device is another UE 40N (the other UE-initiated COT) is explained. Note that, in FIG. 24, explanation of the same communication processing as the communication processing in FIG. 19 is omitted.

The other UE 40N performs channel access and acquires a COT. The other UE 40N transmits a UCI through an uplink such as the PUCCH or the PUSCH in the licensed band. The UCI includes information concerning the COT acquired by the other UE 40N.

The base station 20 transmits the SL grant to the TxUE 40T using the licensed band. The SL grant can include control information for scheduling the PSSCH and information concerning transmission permission using the COT acquired by the other UE 40N.

In FIG. 24, the base station 20 performs scheduling of the PSSCHs #3 and # 4 using the SL grant. The PSSCHs #1 and #2 are scheduled by another SL grant before the SL grant transmitted by the base station 20. Alternatively, the PSSCHs #1 and #2 are semi-statically scheduled by RRC signaling such as a Configured grant.

In FIG. 24, the other UE 40N can transmit a predetermined signal using the PSSCHs #1 and #2. The predetermined signal only has to be a signal for preventing a channel from coming into an idle state. Examples of the predetermined signal include signals transmitted for various purposes such as a dummy signal, a sidelink synchronization signal, and a notification signal including a control signal that can be notified. The PSSCHs #1, #2 may be transmitted in the sidelink resource allocation mode 2.

As explained above, in FIG. 24, the other UE 40N transmits the UCI to the base station 20 using the licensed band. The base station 20 transmits the SL grant to the TxUE 40T using the licensed band. For that reason, compared with the case illustrated in FIG. 19, the other UE 40N can transmit the UCI without being affected by channel access. The base station 20 can transmit the SL grant without being affected by channel access.

### <4.2. Sidelink resource allocation mode 2>

In the following explanation, sidelink communication to which the technique according to the present embodiment is applied in the sidelink resource allocation mode 2 in which the TxUE 40T and/or the RxUE 40R selects a sidelink resource to be used for transmission is explained.

### <4.2.1. Application example 3-1 (A case in which the COT acquisition device is the base station)>

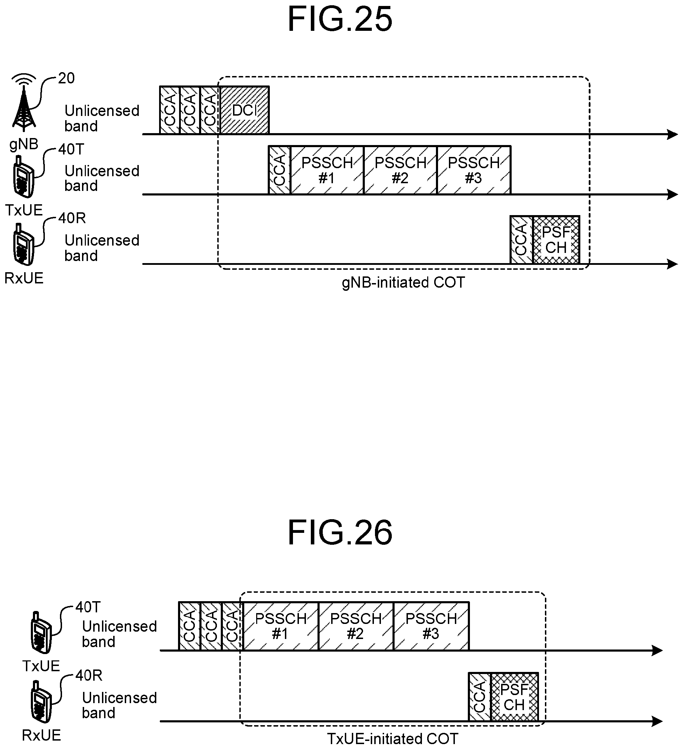

FIG. 25 is a diagram illustrating an example of sidelink communication according to an application example 3-1 of the embodiment of the present disclosure. FIG. 25 illustrates a case in which the base station 20 is the gNB.

Here, a case in which the sidelink communication is in the sidelink resource allocation mode 2, the Uu link is the unlicensed band, and the COT acquisition device is the base station 20 (the gNodeB-initiated COT) is explained.

The sidelink communication in this application example is suitable for the second COT response mode. In the sidelink communication in this application example, it is desirable that the first COT response mode is restricted not to be configured.

As explained above, in the sidelink communication in this application example, since the sidelink resource allocation mode 2 is configured, the base station 20 does not transmit the scheduling information of the PSSCH (or the PSCCH). The base station 20 transmits information concerning the acquired COT to the TxUE 40T and/or the RxUE 40R using the acquired COT.

The base station 20 illustrated in FIG. 25 performs channel access and acquires a COT. The base station 20 transmits a DCI including the information concerning the acquired COT. The information concerning the COT is transmitted through, for example, a PDCCH specific to the TxUE 40T, a Group common PDCCH for a plurality of terminal devices 40 including the TxUE 40T, or a PBCH including notification information.

The control information (DCI) can include assist information concerning transmission of the PSSCH and/or transmission of the PSFCH. The assist information can be used for the purpose of avoiding (or reducing) contention with another terminal device 40 when the TxUE 40T and/or the RxUE 40R selects a resource. For example, the assist information is information indicating whether the PSSCH or the PSFCH can be transmitted (or is suitable) with respect to a predetermined resource.

The TxUE 40T selects a sidelink resource for transmitting the PSSCH according to a predetermined method. The TxUE 40T transmits the PSSCH to the RxUE 40R on the selected resource using a COT shared by the base station 20.

When receiving the PSSCH, the RxUE 40R performs HARQ-ACK report for the received PSSCH.

Note that, although the base station 20 transmits the DCI using the unlicensed band here, the base station 20 may transmit the DCI using the licensed band.

### <4.2.2. Application example 4-2 (A case in which the COT acquisition device is the TxUE 40T)>

FIG. 26 is a diagram illustrating an example of sidelink communication according to an application example 4-2 of the embodiment of the present disclosure. FIG. 26 illustrates a case in which the base station 20 is the gNB.

Here, a case in which the sidelink communication is in the sidelink resource allocation mode 2, the Uu link is the licensed band, and the COT acquisition device is the TxUE 40T (the TxUE-initiated COT) is explained.

The sidelink communication explained in this application example is suitable for both of the first COT response mode and the second COT response mode. The sidelink communication explained in this application example is suitable for both of the first COT sharing mode and the second COT sharing mode. In this application example, the first COT response mode and the first COT sharing mode can be simultaneously configured.

The TxUE 40T performs channel access and acquires a COT. The TxUE 40T transmits the PSSCH (in FIG. 26, the PSSCHs #1 to #3) to the RxUE 40R using the acquired COT.

When receiving the PSSCH, the RxUR performs HARQ-ACK report for the received PSSCH.

When acquiring the COT, the TxUE 40T can acquire the COT based on control information set from the base station 20 or control information set in advance. The control information can include, for example, a COT acquirable resource, a channel access type, and channel access start timing.

### <4.2.3. Application example 4-3 (A case in which the COT acquisition device is the RxUE 40R)>

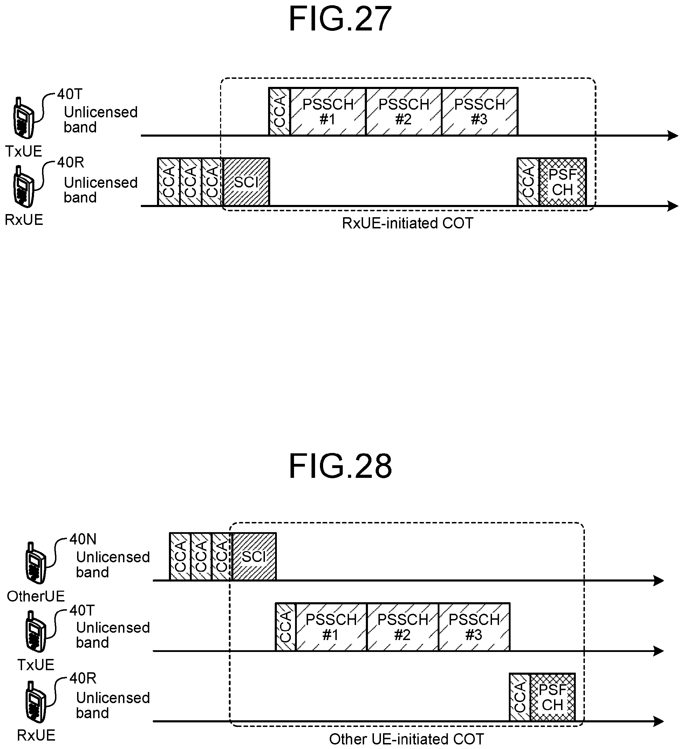

FIG. 27 is a diagram illustrating an example of sidelink communication according to an application example 4-3 of the embodiment of the present disclosure. FIG. 27 illustrates a case in which the base station 20 is the gNB.

Here, a case in which the sidelink communication is in the sidelink resource allocation mode 2, the Uu link is the licensed band, and the COT acquisition device is the RxUE 40R (the RxUE-initiated COT) is explained.

The sidelink communication explained in this application example is suitable for both of the first COT response mode and the second COT response mode. The sidelink communication explained in this application example is suitable for both of the first COT sharing mode and the second COT sharing mode. In this application example, the first COT response mode and the first COT sharing mode can be simultaneously configured.

The RxUE 40R performs channel access and acquires a COT. The RxUE 40R transmits information (SCI: Sidelink control information) concerning the acquired COT to the TxUE 40T. The RxUE 40R transmits the SCI to the TxUE 40T using the acquired COT. The RxUE 40R transmits the SCI to the TxUE 40T through a sidelink source (for example, the PSCCH, the PSSCH, or the PFSCH).

The information concerning the COT (the SCI) can include, for example, information such as a time length, a time offset, frequency resource information, and a channel access priority class of the shared COT.

The TxUE 40T transmits the PSSCH (in FIG. 27, the PSSCHs #1 to #3) to the RxUE 40R using the COT shared by the RxUE 40R.

When receiving the PSSCH, the RxUR performs HARQ-ACK report for the received PSSCH.

When acquiring the COT, the RxUE 40R can acquire the COT based on control information set from the base station 20 or control information set in advance. The control information can include, for example, a COT acquirable resource, a channel access type, and channel access start timing.

Note that the application examples 4-2 and 4-3 can be implemented in combination. For example, the first terminal device 40_1 functions as the TxUE 40T and the second terminal device 40_2 functions as the UxUE to perform the sidelink communication in the application example 4-2. That is, the first terminal device 40_1 acquires the COT and transmits the PSSCH to the second terminal device 40_2 using the acquired COT.

Thereafter, the first terminal device 40_1 functions as the UxUE and the second terminal device 40_2 functions as the TxUE 40T to perform the sidelink communication in the application example 4-3. That is, the first terminal device 40_1 receives the PSSCH from the second terminal device 40_2 using an acquired remaining COT.

That is, the first terminal device 40_1 performs both of transmission and reception of the PSSCH to and from the second terminal device 40_2 using the acquired COT. As explained above, the application examples of the present disclosure can be combined as appropriate.

Note that, here, the first terminal device 40_1 that has acquired the COT transmits the PSSCH to the second terminal device 40_2 and then receives the PSSCH. However, the order of the transmission and the reception by the first terminal device 40_1 may be changed.

That is, the sidelink communication of the first terminal device 40_1 and the second terminal device 40_2 can be executed in the order of the application examples 4-3 and 4-2. For example, the first terminal device 40_1 acquires the COT and receives the PSSCH from the second terminal device 40_2 using the acquired COT. Thereafter, the first terminal device 40_1 transmits the PSSCH to the second terminal device 40_2 using the remaining COT.

### <4.2.4. Application example 4-4 (A case in which the COT acquisition device is another UE)>

FIG. 28 is a diagram illustrating an example of sidelink communication according to an application example 4-4 of the embodiment of the present disclosure. FIG. 28 illustrates a case in which the base station 20 is the gNB.

Here, a case in which the sidelink communication is in the sidelink resource allocation mode 2, the Uu link is the licensed band, and the COT acquisition device is the RxUE 40R (the other UE-initiated COT) is explained.

The sidelink communication in this application example is suitable for the second COT response mode. In the sidelink communication in this application example, it is desirable that the first COT response mode is restricted not to be configured.

Note that the sidelink communication in this application example is different from the sidelink communication illustrated in FIG. 25 in which the COT acquisition device is the base station 20 in that the COT acquisition device is the other UE 40N. The sidelink communication in this application example is different from the sidelink communication illustrated in FIG. 25 in which the base station 20 transmits the DCI in that the other UE 40N transmits the information concerning the COT with the SCI. Communication processing other than the above is the same as the communication processing in the sidelink communication illustrated in FIG. 25.

The other UE 40N performs channel access and acquires a COT. The other UE 40N transmits information (SCI) concerning the acquired COT to the TxUE 40T. The other UE 40N transmits the SCI to the TxUE 40T using the acquired COT. The other UE 40N transmits the SCI to the TxUE 40T through a sidelink source (for example, the PSCCH, the PSSCH, or the PFSCH).

The information concerning the COT (the SCI) can include, for example, information such as a time length, a time offset, frequency resource information, and a channel access priority class of the shared COT.

The TxUE 40T transmits the PSSCH (in FIG. 27, the PSSCHs #1 to #3) to the RxUE 40R using the COT shared by the other UE 40N.

When receiving the PSSCH, the RxUR performs HARQ-ACK report for the received PSSCH.

When acquiring the COT, the other UE 40N can acquire the COT based on control information set from the base station 20 or control information set in advance. The control information can include, for example, a COT acquirable resource, a channel access type, and channel access start timing.

Note that, in the application examples explained above, the RxUE 40R transmits the HARQ-ACK report using the COT used by the TxUE 40T to transmit the PSSCH. That is, in the application examples, the PSSCH and the PSFCH are transmitted in the same COT. However, the PSSCH and the PSFCH may be transmitted in different COTs.

In the application examples explained above, the case in which the second HARQ-ACK report mode is applied to the sidelink communication is explained. However, the first HARQ-ACK report mode may be applied. In this case, the COT used by the RxUE 40R to transmit the HARQ-ACK report can be acquired by the COT acquisition device that has acquired the COT used by the TxUE 40T to transmit the PSSCH. Alternatively, the COT used by the RxUE 40R to transmit the HARQ-ACK report may be acquired by the communication device 10 different from the COT acquisition device that has acquired the COT used by the TxUE 40T to transmit the PSSCH.

### <<5. Other embodiments>>

The embodiment explained above indicates an example, and various changes and applications of the embodiment are possible.

For example, the control device that controls the base station 20 and the terminal device 40 in the embodiment explained above may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the program is installed in a computer and the control device is configured by executing the processing explained above. At this time, the control device may be a device (for example, a personal computer) on the outside of the base station 20 and the terminal device 40. The control device may be a device (for example, the control units 24 and 45) on the inside of the base station 20 and the terminal device 40.

The communication program explained above may be stored in a disk device included in a server device on a network such as the Internet such that the communication program can be downloaded to a computer. The functions explained above may be implemented by cooperation of an OS (Operating System) and application software. In this case, a portion other than the OS may be stored in a medium and distributed or the portion other than the OS may be stored in the server device such that the portion can be downloaded to the computer.

Among the kinds of processing explained in the embodiment, all or a part of the processing explained as being automatically performed can be manually performed or all or a part of the processing explained as being manually performed can be automatically performed by a publicly-known method. Besides, the processing procedures, the specific names, and the information including the various data and parameters explained in the document and illustrated in the drawings can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be functionally or physically distributed and integrated in any unit according to various loads, usage situations, and the like. Note that this configuration by the distribution and the integration may be dynamically performed.

The embodiments explained above can be combined as appropriate in a range for not causing the processing contents to contradict one another. The order of the steps illustrated in the sequence chart of the embodiment explained above can be changed as appropriate.

For example, the present embodiment can be implemented as any configuration configuring a device or a system, for example, a processor functioning as a system LSI (Large Scale Integration) or the like, a module using a plurality of processors or the like, a unit using a plurality of modules or the like, a set obtained by further adding other functions to the unit, and the like (that is, a configuration of a part of the device).

Note that, in the present embodiment, the system means a set of a plurality of components (devices, modules (parts), and the like) It does not matter whether all the components are present in the same housing. Therefore, both of a plurality of devices housed in separate housings and connected via a network and one device in which a plurality of modules are housed in one housing are systems.

For example, the present embodiment can adopt a configuration of cloud computing in which one function is shared and processed by a plurality of devices in cooperation via a network.

### <<6. Conclusion>>

Although the embodiment of the present disclosure is explained above, the technical scope of the present disclosure is not limited to the embodiment per se, and various modifications can be made without departing from the gist of the present disclosure. Components in different embodiments and modifications may be combined as appropriate. That is, at least a part of the one or more embodiments explained above may be executed in combination with at least another part of the one or more embodiments explained above.

The effects in the embodiments described in this specification are only illustrations and are not limited. Other effects may be present.

Note that the present technology can also take the following configurations.
(1) A transmission device that performs sidelink communication with a reception device using a shared spectrum, the transmission device comprising
   a control unit that transmits at least one of a PSCCH (Physical Sidelink Control Channel) and a PSSCH (Physical Sidelink Shared Channel) to the reception device using a predetermined sidelink resource within a COT (Channel Occupancy Time) acquired by a predetermined COT acquisition device, wherein
   the predetermined COT acquisition device is any one of a base station, the transmission device, the reception device, and a communication device.
(2) The transmission device according to (1), wherein, when the predetermined COT acquisition device is any one of the transmission device, the reception device, and the communication device, the predetermined COT acquisition device notifies information concerning the acquired COT to the base station through a PUCCH (Physical Uplink Control Channel) or a PUSCH (Physical Uplink Shared Channel).
(3) The transmission device according to (1) or (2), wherein
   when the predetermined COT acquisition device is one of the transmission device and the reception device,
   the control unit performs the sidelink communication with the reception device in a first COT response mode,
   the first COT response mode is a mode in which
   the COT is shared between the predetermined COT acquisition device and a predetermined COT response device and
   the predetermined COT response device performs the sidelink communication using the predetermined sidelink resource within the COT with the predetermined COT acquisition device, and
   the predetermined COT response device is another of the transmission device and the reception device.
(4) The transmission device according to (1) or (2), wherein
   when the predetermined COT acquisition device is the base station or the communication device,
   the control unit performs the sidelink communication with the reception device in a second COT response mode,
   the second COT response mode is a mode in which
   the COT is shared between the predetermined COT acquisition device and a predetermined COT response device and
   the predetermined COT response device performs communication using the predetermined sidelink resource within the COT with the predetermined COT acquisition device and another device,
   the predetermined COT response device is one of the transmission device and the reception device, and
   the other device is another of the transmission device and the reception device.
(5) The transmission device according to any one of (1) to (4), wherein
   the control unit receives a HARQ report concerning the PSSCH from the reception device via a PSFCH (Physical Sidelink Feedback Channel), and
   the reception device transmits the PSFCH using the COT or another COT different from the COT.
(6) The transmission device according to (5), wherein, when the PSFCH is transmitted using the COT, a resource of the PSFCH is determined by control information concerning the PSFCH transmitted by the transmission device or the base station.
(7) The transmission device according to (6), wherein
   when a first COT sharing mode is configured for the sidelink communication, the resource of the PSFCH is determined by the control information concerning the PSFCH transmitted by the base station,
   the first COT sharing mode is a mode in which
   the predetermined COT acquisition device shares the COT with a predetermined COT response device, and
   the predetermined COT response device is the reception device.
(8) The transmission device according to (7), wherein
   the first COT sharing mode is a mode in which sharing of the COT between the predetermined COT response device and another device is restricted.
(9) The transmission device according to (6), wherein
   when a second COT sharing mode is configured for the sidelink communication, a resource of the PSFCH is determined by control information concerning the PSFCH transmitted by the transmission device,
   the second COT sharing mode is a mode in which
   the predetermined COT acquisition device shares the COT with a predetermined COT response device and
   the predetermined COT response device can share the COT with another device,
   the predetermined COT response device is the transmission device, and
   the other device is the reception device.
(10) The transmission device according to (9), wherein, when the second COT sharing mode is configured for the sidelink communication, a number of times the other device functions as the predetermined COT response device and performs COT sharing is limited to a predetermined number of times.
(11) The transmission device according to any one of (5) to (10), wherein the reception device transmits the PSFCH using a periodically allocated resource.
(12) The transmission device according to any one of (5) to (10), wherein the reception device transmits the PSFCH using a resource notified by control information.
(13) The transmission device according to any one of (1) to (12), wherein the control unit performs the sidelink communication with the reception device using the predetermined sidelink resource notified from the base station.
(14) The transmission device according to any one of (1) to (12), wherein the control unit selects the predetermined sidelink resource and performs the sidelink communication with the reception device using the selected predetermined sidelink resource.
(15) A reception device that performs sidelink communication with a transmission device using a shared spectrum, the reception device comprising
   a control unit that receives at least one of a PSCCH and a PSSCH transmitted from the transmission device using a predetermined sidelink resource within a COT acquired by a predetermined COT acquisition device, wherein
   the predetermined COT acquisition device is any one of a base station, the transmission device, the reception device, and a communication device.
(16) A base station that selects a predetermined sidelink resource to be used in sidelink communication when a transmission device and a reception device perform the sidelink communication using a shared spectrum, the base station comprising
   a control unit that selects, from within a COT acquired by a predetermined COT acquisition device, the predetermined sidelink resource to be used to transmit at least one of a PSCCH and a PSSCH, wherein
   the predetermined COT acquisition device is any one of a base station, the transmission device, the reception device, and a communication device.
(17) A method in which a transmission device performs sidelink communication with a reception device using a shared spectrum, the method comprising
   transmitting at least one of a PSCCH and a PSSCH to the reception device using a predetermined sidelink resource within a COT acquired by a predetermined COT acquisition device, wherein
   the predetermined COT acquisition device is any one of a base station, the transmission device, the reception device, and a communication device.
(18) A method in which a reception device performs sidelink communication with a transmission device using a shared spectrum, the method comprising
   receiving at least one of a PSCCH and a PSSCH transmitted from the transmission device using a predetermined sidelink resource within a COT acquired by a predetermined COT acquisition device, wherein
   the predetermined COT acquisition device is any one of a base station, the transmission device, the reception device, and a communication device.
(19) A method in which a base station selects a predetermined sidelink resource to be used in sidelink communication when a transmission device and a reception device perform the sidelink communication using a shared spectrum, the method comprising
   selecting, from within a COT acquired by a predetermined COT acquisition device, the predetermined sidelink resource to be used to transmit at least one of a PSCCH and a PSSCH, wherein
   the predetermined COT acquisition device is any one of a base station, the transmission device, the reception device, and a communication device.

### Reference Signs List

10 COMMUNICATION DEVICE
20 BASE STATION
21, 41 SIGNAL PROCESSING UNIT
22, 42 STORAGE UNIT
23 NETWORK COMMUNICATION UNIT
24, 45 CONTROL UNIT
40 TERMINAL DEVICE
44 INPUT/OUTPUT UNIT

## Claims

1. A transmission device that performs sidelink communication with a reception device using a shared spectrum, the transmission device comprising
a control unit that transmits at least one of a PSCCH (Physical Sidelink Control Channel) and a PSSCH (Physical Sidelink Shared Channel) to the reception device using a predetermined sidelink resource within a COT (Channel Occupancy Time) acquired by a predetermined COT acquisition device, wherein
the predetermined COT acquisition device is any one of a base station, the transmission device, the reception device, and a communication device.

2. The transmission device according to claim 1, wherein, when the predetermined COT acquisition device is any one of the transmission device, the reception device, and the communication device, the predetermined COT acquisition device notifies information concerning the acquired COT to the base station through a PUCCH (Physical Uplink Control Channel) or a PUSCH (Physical Uplink Shared Channel) .

3. The transmission device according to claim 1, wherein
when the predetermined COT acquisition device is one of the transmission device and the reception device,
the control unit performs the sidelink communication with the reception device in a first COT response mode,
the first COT response mode is a mode in which
the COT is shared between the predetermined COT acquisition device and a predetermined COT response device and
the predetermined COT response device performs the sidelink communication using the predetermined sidelink resource within the COT with the predetermined COT acquisition device, and
the predetermined COT response device is another of the transmission device and the reception device.

4. The transmission device according to claim 1, wherein
when the predetermined COT acquisition device is the base station or the communication device,
the control unit performs the sidelink communication with the reception device in a second COT response mode,
the second COT response mode is a mode in which
the COT is shared between the predetermined COT acquisition device and a predetermined COT response device and
the predetermined COT response device performs communication using the predetermined sidelink resource within the COT with the predetermined COT acquisition device and another device,
the predetermined COT response device is one of the transmission device and the reception device, and
the other device is another of the transmission device and the reception device.

5. The transmission device according to claim 1, wherein
the control unit receives a HARQ report concerning the PSSCH from the reception device via a PSFCH (Physical Sidelink Feedback Channel), and
the reception device transmits the PSFCH using the COT or another COT different from the COT.

6. The transmission device according to claim 5, wherein, when the PSFCH is transmitted using the COT, a resource of the PSFCH is determined by control information concerning the PSFCH transmitted by the transmission device or the base station.

7. The transmission device according to claim 6, wherein
when a first COT sharing mode is configured for the sidelink communication, the resource of the PSFCH is determined by the control information concerning the PSFCH transmitted by the base station,
the first COT sharing mode is a mode in which
the predetermined COT acquisition device shares the COT with a predetermined COT response device, and
the predetermined COT response device is the reception device.

8. The transmission device according to claim 7, wherein
the first COT sharing mode is a mode in which sharing of the COT between the predetermined COT response device and another device is restricted.

9. The transmission device according to claim 6, wherein
when a second COT sharing mode is configured for the sidelink communication, a resource of the PSFCH is determined by control information concerning the PSFCH transmitted by the transmission device,
the second COT sharing mode is a mode in which
the predetermined COT acquisition device shares the COT with a predetermined COT response device and
the predetermined COT response device can share the COT with another device,
the predetermined COT response device is the transmission device, and
the other device is the reception device.

10. The transmission device according to claim 9, wherein, when the second COT sharing mode is configured for the sidelink communication, a number of times the other device functions as the predetermined COT response device and performs COT sharing is limited to a predetermined number of times.

11. The transmission device according to claim 5, wherein the reception device transmits the PSFCH using a periodically allocated resource.

12. The transmission device according to claim 5, wherein the reception device transmits the PSFCH using a resource notified by control information.

13. The transmission device according to claim 1, wherein the control unit performs the sidelink communication with the reception device using the predetermined sidelink resource notified from the base station.

14. The transmission device according to claim 1, wherein the control unit selects the predetermined sidelink resource and performs the sidelink communication with the reception device using the selected predetermined sidelink resource.

15. A reception device that performs sidelink communication with a transmission device using a shared spectrum, the reception device comprising
a control unit that receives at least one of a PSCCH and a PSSCH transmitted from the transmission device using a predetermined sidelink resource within a COT acquired by a predetermined COT acquisition device, wherein
the predetermined COT acquisition device is any one of a base station, the transmission device, the reception device, and a communication device.

16. A base station that selects a predetermined sidelink resource to be used in sidelink communication when a transmission device and a reception device perform the sidelink communication using a shared spectrum, the base station comprising
a control unit that selects, from within a COT acquired by a predetermined COT acquisition device, the predetermined sidelink resource to be used to transmit at least one of a PSCCH and a PSSCH, wherein
the predetermined COT acquisition device is any one of a base station, the transmission device, the reception device, and a communication device.

17. A method in which a transmission device performs sidelink communication with a reception device using a shared spectrum, the method comprising
transmitting at least one of a PSCCH and a PSSCH to the reception device using a predetermined sidelink resource within a COT acquired by a predetermined COT acquisition device, wherein
the predetermined COT acquisition device is any one of a base station, the transmission device, the reception device, and a communication device.

18. A method in which a reception device performs sidelink communication with a transmission device using a shared spectrum, the method comprising
receiving at least one of a PSCCH and a PSSCH transmitted from the transmission device using a predetermined sidelink resource within a COT acquired by a predetermined COT acquisition device, wherein
the predetermined COT acquisition device is any one of a base station, the transmission device, the reception device, and a communication device.

19. A method in which a base station selects a predetermined sidelink resource to be used in sidelink communication when a transmission device and a reception device perform the sidelink communication using a shared spectrum, the method comprising
selecting, from within a COT acquired by a predetermined COT acquisition device, the predetermined sidelink resource to be used to transmit at least one of a PSCCH and a PSSCH, wherein
the predetermined COT acquisition device is any one of a base station, the transmission device, the reception device, and a communication device.
